# EUROPEAN PATENT SPECIFICATION

(11) **EP 3 079 310 B1**
(45) Date of publication and mention of the grant of the patent: **20.09.2017**
(21) Application number: 14880281.2
(22) Date of filing: 26.01.2014
(51) Int. Cl.: H04L 12/46

(54) **DATA PACKET SENDING METHOD AND MOBILE ROUTER**
SENDEVERFAHREN FÜR DATENPAKETE UND MOBILER ROUTER
PROCÉDÉ D'ENVOI DE PAQUETS DE DONNÉES ET ROUTEUR MOBILE

(43) Date of publication of application: 12.10.2016
(73) Proprietor: Huawei Technologies Co., Ltd., Longgang District Shenzhen, Guangdong 518129 (CN)
(72) Inventor: XIONG, Chunshan, Shenzhen Guangdong 518129 (CN); LIU, Jianning, Shenzhen Guangdong 518129 (CN)
(74) Representative: Maiwald Patentanwalts GmbH
(86) International application number: PCT/CN2014/071517
(87) International publication number: WO 2015/109583

(56) References cited:
- CN-A- 101 321 384
- CN-A- 101 621 438
- CN-A- 102 045 235
- US-A1- 2010 135 301
- US-A1- 2012 020 284
- US-A1- 2012 188 945
- US-B1- 8 279 752

## Description

### TECHNICAL FIELD

The present invention relates to the field of communications technologies, and in particular, to a data packet sending method and a mobile router.

### BACKGROUND

DMM (Distributed Mobility Management, Distributed Mobility Management) appears for purposes of resolving problems such as a single-point failure and route redundancy in existing centralized mobility management.

US2012/0188945A1 discloses a route optimization method and an access router. The route optimization method includes: an access router receives a test initiation message sent by a source IP node that initiates route optimization; determine a destination IP node of the route optimization according to the test initiation message; and establish route optimization between the source IP node and the destination IP node in place of the destination IP node. Therefore, the destination IP node that receives the route optimization can implement route optimization through the access router even if the route optimization in the mobile IPv6 protocol is not supported.

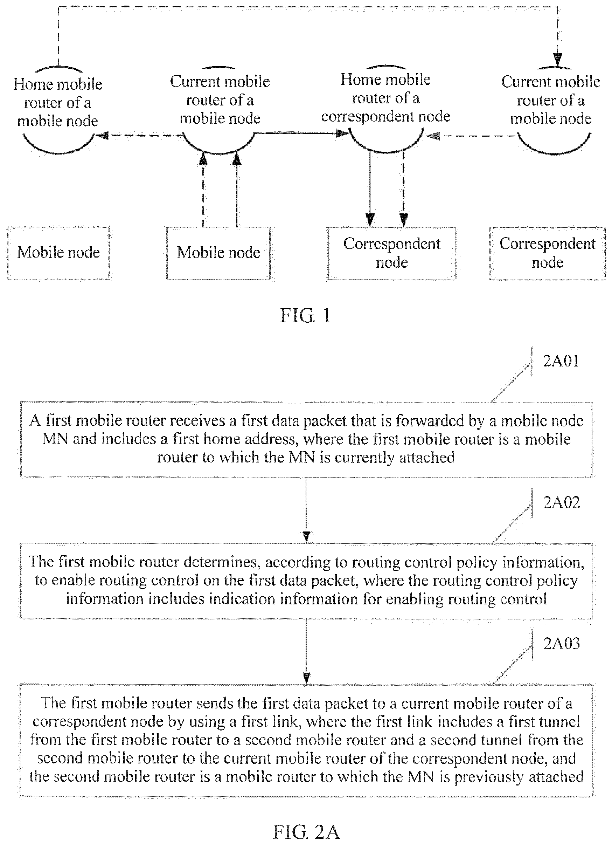

Route optimization (Route optimization, RO) is a default characteristic of the DMM, that is, route optimization is automatically performed if a network supports the DMM. As shown in FIG. 1, FIG. 1 is a scenario in which an MN (mobile node, mobile node) and a CN (Correspondent Node, correspondent node) are mobile nodes, a home mobile router serving the MN allocates an HoA (home address, home address) to the MN, and the MN is currently attached to a current mobile router serving the MN. Because the MN is currently attached to the current mobile router serving the MN, an MN under the home mobile router serving the MN is represented by using dashed lines, so does a CN.

Without DMM route optimization, a data routing path between the MN and the CN is indicated by dashed arrows in FIG. 1, data from the MN is forwarded, by using the current mobile router serving the MN, to the home mobile router serving the MN; then is sent by the home mobile router serving the MN to a home mobile router serving the CN; is forwarded by the home mobile router serving the CN to a current mobile router serving the CN; and finally is forwarded to the CN. It may be learned that the path is not optimal, a transmission delay is increased at the same time, and a single-point failure is likely to occur.

After the DMM route optimization is used, as indicated by solid arrows in FIG. 1, data between the MN and the CN may be sent through a DMM optimization tunnel from the current mobile router serving the MN directly to the current mobile router serving the CN; and then is forwarded to the CN, where the DMM optimization tunnel may be implemented by using a protocol, such as a GTP (General Data Transfer Platform, general data transfer platform), a PMIP (Proxy Mobile IP, Proxy Mobile IP), or a GRE (Generic Routing Encapsulation, Generic Routing Encapsulation).

In a network that supports the DMM, route optimization is a default characteristic of the DMM, where route optimization is automatically performed in the network. However, in some cases, data may need to be sent to a designated network node. In the prior art, either without route optimization, data needs to pass through a relatively long and complex path to arrive at an end point, or with route optimization, data is sent from a start point directly to an end point, and cannot arrive at an intermediate network node. It may be learned that, in the prior art, an objective of sending data to a designated network node cannot be achieved.

### SUMMARY

Embodiments of the present invention provide a data packet sending method and a mobile router, so as to resolve a technical problem in the prior art that data cannot be sent to a designated network node.

According to a first aspect of the present invention, a data packet sending method is provided, including:
receiving, by a first mobile router, a first data packet that is forwarded by a mobile node MN and includes a first home address, where the first mobile router is a mobile router to which the MN is currently attached;
determining, by the first mobile router according to routing control policy information, to enable routing control on the first data packet, where the routing control policy information includes indication information for enabling routing control; and
sending, by the first mobile router, the first data packet to a current mobile router of a correspondent node by using a first link, where the first link includes a first tunnel from the first mobile router to a second mobile router and a second tunnel from the second mobile router to the current mobile router of the correspondent node, and the second mobile router was a mobile router to which the MN is previously attached.

With reference to the first aspect, in a first possible implementation manner, before the receiving, by the first mobile router, a first data packet that is forwarded by a mobile node MN and includes a first home address, the method further includes:
obtaining, by the first mobile router, the routing control policy information, where the routing control policy information includes address information of the second mobile router; and
establishing, by the first mobile router, the first tunnel according to the address information of the second mobile router.

With reference to the first possible implementation manner, in a second possible implementation manner, the obtaining, by the first mobile router, the routing control policy information includes: when the MN is attached to the first mobile router, obtaining, by the first mobile router, the routing control policy information from a home location manager of the MN.

With reference to the first possible implementation manner, in a third possible implementation manner, the obtaining, by the first mobile router, the routing control policy information includes: when the MN is attached to the first mobile router, receiving, by the first mobile router, the routing control policy information and a tunnel establishment instruction that are sent by the MN; and
the establishing, by the first mobile router, the first tunnel according to the address information of the second mobile router includes: establishing, by the first mobile router, the first tunnel according to the tunnel establishment instruction and the address information of the second mobile router.

With reference to the first possible implementation manner, the second possible implementation manner, or the third possible implementation manner, in a fourth possible implementation manner, after the establishing, by the first mobile router, the first tunnel according to the address information of the second mobile router, the method further includes:
triggering, by the first mobile router, the second mobile router to release a tunnel from the second mobile router to a source mobile router of the MN, where the source mobile router of the MN is a mobile router, except the second mobile router, in the mobile router to which the MN is previously attached.

With reference to the first possible implementation manner, in a fifth possible implementation manner, the obtaining, by the first mobile router, the routing control policy information includes: receiving, by the first mobile router, a routing control request, where the routing control request includes the routing control policy information.

With reference to the fifth possible implementation manner, in a sixth possible implementation manner, after the receiving, by the first mobile router, a routing control request, the method further includes: initiating, by the first mobile router, an update procedure to a home location manager of the MN, so that the home location manager of the MN updates, according to the routing control policy information carried in the routing control request, routing control policy information that is stored in the home location manager of the MN and corresponds to the MN.

With reference to the fifth possible implementation manner, in a seventh possible implementation manner, after the receiving, by the first mobile router, a routing control request, the method further includes: initiating, by the first mobile router, an update procedure to the MN, so that the MN updates, according to the routing control policy information carried in the routing control request, routing control policy information stored in the MN.

With reference to the first aspect or any one of the first possible implementation manner to the seventh possible implementation manner, in an eighth possible implementation manner, the enabling routing control refers to enabling routing control on a designated home address of the MN, and disabling routing control refers to disabling routing control on the designated home address of the MN, or
the enabling routing control refers to enabling routing control on all data packets of the MN, and disabling routing control refers to disabling routing control on all the data packets of the MN.

According to a second aspect of the present invention, a data packet sending method is provided, including:
receiving, by an MN, a first data packet that includes a first home address; and
forwarding, by the MN, the first data packet to a first mobile router, so that the first mobile router sends the first data packet to a current mobile router of a correspondent node by using a first link, where the first link includes a first tunnel from the first mobile router to a second mobile router and a second tunnel from the second mobile router to the current mobile router of the correspondent node, the second mobile router is a mobile router to which the MN is previously attached, the routing control policy information includes indication information for enabling routing control, and the first mobile router is a mobile router to which the MN is currently attached.

With reference to the second aspect, in a first possible implementation manner, before the forwarding, by the MN, the first data packet to the first mobile router, the method further includes:
receiving, by the MN, an update request initiated by the first mobile router; and
performing, by the MN, an update procedure according to the update request, to update, according to the received routing control policy information that is sent by the first mobile router, routing control policy information stored in the MN.

With reference to the second aspect, in a second possible implementation manner, before the forwarding, by the MN, the first data packet to the first mobile router, the method further includes:
in a process in which the MN attaches to the first mobile router, sending, by the MN, the routing control policy information and a tunnel establishment instruction to the first mobile router, so that the first mobile router establishes the first tunnel according to the routing control policy information.

According to a third aspect of the present invention, a mobile router is provided, including:
a receiving module, configured to receive a first data packet that is forwarded by an MN and includes a first home address, where the first mobile router is a mobile router to which the MN is currently attached;
a processing module, configured to determine, according to routing control policy information, to enable routing control on the first data packet, where the routing control policy information includes indication information for enabling routing control; and
a sending module, configured to send the first data packet to a current mobile router of a correspondent node by using a first link, where the first link includes a first tunnel from the first mobile router to a second mobile router and a second tunnel from the second mobile router to the current mobile router of the correspondent node, and the second mobile router is a mobile router to which the MN is previously attached.

With reference to the third aspect, in a first possible implementation manner, the receiving module is further configured to obtain the routing control policy information, where the routing control policy information includes address information of the second mobile router; and
the mobile router further includes: an establishment module, configured to establish the first tunnel according to the address information of the second mobile router.

With reference to the first possible implementation manner, in a second possible implementation manner, the receiving module is specifically configured to: when the MN is attached to the first mobile router, obtain the routing control policy information from a home location manager of the MN.

With reference to the first possible implementation manner, in a third possible implementation manner, the receiving module is specifically configured to: when the MN is attached to the first mobile router, receive, by using the receiving module, the routing control policy information and a tunnel establishment instruction that are sent by the MN; and
the establishment module is specifically configured to establish the first tunnel according to the tunnel establishment instruction and the address information of the second mobile router.

With reference to any possible implementation manner of the first possible implementation manner to the third possible implementation manner, in a fourth possible implementation manner, the processing module is further configured to trigger the second mobile router to release a tunnel from the second mobile router to a source mobile router of the MN, where the source mobile router of the MN is a mobile router, except the second mobile router, in the mobile router to which the MN is previously attached.

With reference to the first possible implementation manner, in a fifth possible implementation manner, the receiving module is further configured to receive a routing control request, where the routing control request includes the routing control policy information.

With reference to the fifth possible implementation manner, in a sixth possible implementation manner, the processing module is further configured to initiate an update procedure to a home location manager of the MN, so that the home location manager of the MN updates, according to the routing control policy information carried in the routing control request, routing control policy information that is stored in the home location manager of the MN and corresponds to the MN.

With reference to the fifth possible implementation manner, in a seventh possible implementation manner, the processing module is further configured to initiate an update procedure to the MN, so that the MN updates, according to the routing control policy information carried in the routing control request, routing control policy information stored in the MN.

With reference to the third aspect or any possible implementation manner of the first possible implementation manner to the seventh possible implementation manner, in an eighth possible implementation manner, the enabling routing control refers to enabling routing control on a designated home address of the MN, or the enabling routing control refers to enabling routing control on all data packets of the MN.

According to a fourth aspect of the present invention, a mobile node is provided, including:
a receiving module, configured to receive a first data packet that includes a first home address; and
a sending module, configured to forward the first data packet to a first mobile router, so that the first mobile router sends, according to routing control policy information, the first data packet to a current mobile router of a correspondent node by using a first link, where the first link includes a first tunnel from the first mobile router to a second mobile router and a second tunnel from the second mobile router to the current mobile router of the correspondent node, the second mobile router is a mobile router to which the mobile node is previously attached, the routing control policy information includes indication information for enabling routing control, and the first mobile router is a mobile router to which the mobile node is currently attached.

With reference to the fourth aspect, in a first possible implementation manner, the receiving module is further configured to receive an update request initiated by the first mobile router; and
the mobile node further includes a second processing module, configured to perform an update procedure according to the update request, to update, according to the received routing control policy information that is sent by the first mobile router, routing control policy information stored in the MN.

With reference to the fourth aspect, in a second possible implementation manner, the sending module is further configured to: in a process in which the mobile node attaches to the first mobile router, send the routing control policy information and a tunnel establishment instruction to the first mobile router, so that the first mobile router establishes the first tunnel according to the routing control policy information.

According to a fifth aspect of the present invention, a mobile router is provided, including:
a receiver, configured to receive a first data packet that is forwarded by an MN and includes a first home address, where the first mobile router is a mobile router to which the MN is currently attached;
a processor, configured to determine, according to routing control policy information, to enable routing control on the first data packet, where the routing control policy information includes indication information for enabling routing control; and
a transmitter, configured to send the first data packet to a current mobile router of a correspondent node by using a first link, where the first link includes a first tunnel from the first mobile router to a second mobile router and a second tunnel from the second mobile router to the current mobile router of the correspondent node, and the second mobile router is a mobile router to which the MN is previously attached.

With reference to the fifth aspect, in a first possible implementation manner, the receiver is further configured to obtain the routing control policy information, where the routing control policy information includes address information of the second mobile router; and establish the first tunnel according to the address information of the second mobile router.

With reference to the first possible implementation manner, in a second possible implementation manner, the receiver is further specifically configured to: when the MN is attached to the first mobile router, obtain the routing control policy information from a home location manager of the MN.

With reference to the first possible implementation manner, in a third possible implementation manner, the receiver is further specifically configured to: when the MN is attached to the first mobile router, receive the routing control policy information and a tunnel establishment instruction that are sent by the MN; and
the processor is further specifically configured to establish the first tunnel according to the tunnel establishment instruction and the address information of the second mobile router.

With reference to the first possible implementation manner, the second possible implementation manner, or the third possible implementation manner, in a fourth possible implementation manner, the processor is further configured to trigger the second mobile router to release a tunnel from the second mobile router to a source mobile router of the MN, where the source mobile router of the MN is a mobile router, except the second mobile router, in the mobile router to which the MN is previously attached.

With reference to the first possible implementation manner, in a fifth possible implementation manner, the receiver is further configured to receive a routing control request, where the routing control request includes the routing control policy information.

With reference to the fifth possible implementation manner, in a sixth possible implementation manner, the processor is further configured to initiate an update procedure to a home location manager of the MN, so that the home location manager of the MN updates, according to the routing control policy information carried in the routing control request, routing control policy information that is stored in the home location manager of the MN and corresponds to the MN.

With reference to the fifth possible implementation manner, in a seventh possible implementation manner, the processor is further configured to initiate an update procedure to the MN, so that the MN updates, according to the routing control policy information carried in the routing control request, routing control policy information stored in the MN.

With reference to the fifth aspect or any possible implementation manner of the first possible implementation manner to the seventh possible implementation manner, in an eighth possible implementation manner, the enabling routing control refers to enabling routing control on a designated home address of the MN, or the enabling routing control refers to enabling routing control on all data packets of the MN.

According to a sixth aspect of the present invention, a mobile node is provided, including:
a receiver, configured to receive a first data packet that includes a first home address; and
a transmitter, configured to forward the first data packet to a first mobile router, so that the first mobile router sends, according to routing control policy information, the first data packet to a current mobile router of a correspondent node by using a first link, where the first link includes a first tunnel from the first mobile router to a second mobile router and a second tunnel from the second mobile router to the current mobile router of the correspondent node, the second mobile router is a mobile router to which the mobile node is previously attached, the routing control policy information includes indication information for enabling routing control, and the first mobile router is a mobile router to which the mobile node is currently attached.

With reference to the sixth aspect, in a first possible implementation manner, the receiver is further configured to receive an update request initiated by the first mobile router; and
the mobile node further includes a processor, configured to perform an update procedure according to the update request, to update, according to the received routing control policy information that is sent by the first mobile router, routing control policy information stored in the MN.

With reference to the sixth aspect, in a second possible implementation manner, the transmitter is further configured to: in a process in which the mobile node attaches to the first mobile router, send the routing control policy information and a tunnel establishment instruction to the first mobile router, so that the first mobile router establishes the first tunnel according to the routing control policy information.

The embodiments of the present invention provide the routing control policy information, and the routing control policy information may be used to indicate whether to enable routing control. After the first data packet that is forwarded by the MN and includes the first home address is obtained, if it is determined to enable routing control, the first data packet may be sent to a CN by using the first link, where the first link includes the designated routing node. In this way, the first data packet may pass through a designated routing node in a sending process, and the designated routing node may perform some processing processes on the first data packet, which resolves a technical problem in the prior art that data cannot arrive at a designated network node in a sending process. In addition, after the method in the embodiments of the present invention is used, the first data packet directly arrives at the designated network node, and then, is sent directly to the CN, which is equivalent to performing route optimization. Unlike the prior art in which without route optimization, multiple nodes generally need to be passed through, in the embodiments of the present invention, the first data packet passes through a relatively short path, and a probability of error occurrence is relatively low in the path.

### BRIEF DESCRIPTION OF DRAWINGS

FIG. 1 is a schematic diagram of DMM route optimization in the prior art;
FIG. 2A is an interaction flowchart of a data packet sending method according to an embodiment of the present invention;
FIG. 2B is an interaction flowchart of another data packet sending method according to an embodiment of the present invention;
FIG. 3A is a first schematic diagram of enabling routing control for IP granularity according to an embodiment of the present invention;
FIG. 3B is a first schematic diagram of moving an MN for a first time when routing control is enabled for IP granularity according to an embodiment of the present invention;
FIG. 3C is a first schematic diagram of moving an MN for a second time when routing control is enabled for IP granularity according to an embodiment of the present invention;
FIG. 4 is a first schematic diagram of disabling routing control for IP granularity according to an embodiment of the present invention;
FIG. 5 is a second schematic diagram of enabling routing control for IP granularity according to an embodiment of the present invention;
FIG. 6A is a third schematic diagram of enabling routing control for IP granularity according to an embodiment of the present invention;
FIG. 6B is a second schematic diagram of moving an MN for a first time when routing control is enabled for IP granularity according to an embodiment of the present invention;
FIG. 6C is a second schematic diagram of moving an MN for a second time when routing control is enabled for IP granularity according to an embodiment of the present invention;
FIG. 7 is a second schematic diagram of disabling routing control for IP granularity according to an embodiment of the present invention;
FIG. 8 is a fourth schematic diagram of enabling routing control for IP granularity according to an embodiment of the present invention;
FIG. 9A is a first schematic diagram of enabling routing control for MN granularity according to an embodiment of the present invention;
FIG. 9B is a first schematic diagram of moving an MN for a first time when routing control is enabled for MN granularity according to an embodiment of the present invention;
FIG. 9C is a first schematic diagram of moving an MN for a second time when routing control is enabled for MN granularity according to an embodiment of the present invention;
FIG. 10 is a first schematic diagram of disabling routing control for MN granularity according to an embodiment of the present invention;
FIG. 11 is a second schematic diagram of enabling routing control for MN granularity according to an embodiment of the present invention;
FIG. 12A is a third schematic diagram of enabling routing control for MN granularity according to an embodiment of the present invention;
FIG. 12B is a second schematic diagram of moving an MN for a first time when routing control is enabled for MN granularity according to an embodiment of the present invention;
FIG. 12C is a second schematic diagram of moving an MN for a second time when routing control is enabled for MN granularity according to an embodiment of the present invention;
FIG. 13 is a second schematic diagram of disabling routing control for MN granularity according to an embodiment of the present invention;
FIG. 14 is a second schematic diagram of enabling routing control for MN granularity according to an embodiment of the present invention;
FIG. 15 is a main structural block diagram of a mobile router according to an embodiment of the present invention;
FIG. 16 is a main structural block diagram of a mobile node according to an embodiment of the present invention;
FIG. 17 is a schematic structural diagram of a mobile router according to an embodiment of the present invention; and
FIG. 18 is a schematic structural diagram of a mobile node according to an embodiment of the present invention.

### DESCRIPTION OF EMBODIMENTS

A data packet sending method in embodiments of the present invention may be applied to a mobile router to which an MN is currently attached, where the method may include: receiving, by a first mobile router, a first data packet that is forwarded by the mobile node MN and includes a first home address, where the first mobile router is the mobile router to which the MN is currently attached; determining, by the first mobile router according to routing control policy information, to enable routing control on the first data packet, where the routing control policy information includes indication information for enabling routing control; and sending, by the first mobile router, the first data packet to a current mobile router of a correspondent node by using a first link, where the first link includes a first tunnel from the first mobile router to a second mobile router and a second tunnel from the second mobile router to the current mobile router of the correspondent node, and the second mobile router is a mobile router to which the MN is previously attached.

The embodiments of the present invention provide the routing control policy information, and the routing control policy information may be used to indicate whether to enable routing control. After the first data packet that is forwarded by the MN and is from the first home address is obtained, if it is determined to enable routing control, the first data packet may be sent to the CN by using the first link, where the first link includes the designated routing node. In this way, the first data packet may pass through a designated routing node in a sending process, and the designated routing node may perform some processing processes on the first data packet, which resolves a technical problem in the prior art that data cannot arrive at a designated network node in a sending process. In addition, after the method in the embodiments of the present invention is used, the first data packet directly arrives at the designated network node, and then, is sent directly to the CN, which is equivalent to performing route optimization. Unlike the prior art in which without route optimization, the first data packet generally needs to pass through multiple nodes, in the embodiments of the present invention, the first data packet passes through a relatively short path, and a probability of error occurrence is relatively low in the path.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

Technologies described in this specification may be applied to various communications systems, for example, current 2G and 3G communications systems and a next-generation communications system, for example, a Global System for Mobile Communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access Wireless) system, a Frequency Division Multiple Access (FDMA, Frequency Division Multiple Addressing) system, an Orthogonal Frequency-Division Multiple Access (OFDMA, Orthogonal Frequency-Division Multiple Access) system, a single-carrier FDMA (SC-FDMA) system, a general packet radio service (GPRS, General Packet Radio Service) system, a Long Term Evolution (LTE, Long Term Evolution) system, and other communications systems.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In the embodiments of the present invention, for ease of description, an XX of an MN may refer to an XX that provides a service for the MN. Likewise, an XX of a CN refers to an XX that provides a service for the CN. For example, a mobile router of an MN may specifically refer to a mobile router that provides a service for the MN, and for example, may be a home mobile router of the MN or may be a current mobile router of the MN. A mobile router of a CN may specifically refer to a mobile router that provides a service for the CN, and for example, may be a home mobile router of the CN or may be a current mobile router of the CN. Generally, a home XXX of an MN is used for description, for example, a home location manager of an MN; a current XXX of an MN is used for description, for example, a current mobile router of an MN; a home XXX of a CN is used for description, for example, a home location manager of a CN; a current XXX of a CN is used for description, for example, a current mobile router of a CN. The current mobile router of the MN may refer to a mobile router to which the MN is currently attached, and a current location manager of the MN may refer to a location manager that provides a service for the mobile router to which the MN is currently attached, which is the same to the CN.

Preferably, in the embodiments of the present invention, alternatively, the CN may be actually an MN, but generally, an MN as an information receiving party is referred to as a CN.

A home location manager is generally responsible for collecting and storing information such as a location or a state of a corresponding network node.

In the embodiments of the present invention, the designated routing node may be a router, or may be a mobile router, or may be a fixed router. Alternatively, the designated routing node may be a network device of another type, for example, some dedicated network devices, including an interception device, a charging device, and the like, which is not limited in the present invention.

The following further describes the embodiments of the present invention in detail with reference to the accompanying drawings of the specification.

A first aspect of the present invention is as follows:
Referring to FIG. 2A, an embodiment of the present invention provides a data packet sending method, where the method may be applied to a mobile router to which an MN is currently attached. A main procedure of the method is as follows:
   Step 2A01: A first mobile router receives a first data packet that is forwarded by a mobile node MN and includes a first home address, where the first mobile router is the mobile router to which the MN is currently attached.
      In this embodiment of the present invention, a network node whose address is the first home address sends the first data packet to the MN, and the MN sends the first data packet to the first mobile router. Generally, a data packet carries an address of a transmit end, and therefore the first data packet includes the first home address.
   Step 2A02: The first mobile router determines, according to routing control policy information, to enable routing control on the first data packet, where the routing control policy information includes indication information for enabling routing control.

Preferably, in this embodiment of the present invention, the routing control policy information includes the indication information of whether to enable routing control. When the routing control policy information indicates enabling of routing control, the first mobile router determines, according to the routing control policy information, to enable routing control on the first data packet.

Preferably, in this embodiment of the present invention, descriptions are made from two aspects: IP (Internet Protocol) granularity and MN granularity. When descriptions are made from the perspective of the IP granularity, enabling routing control refers to enabling routing control for a data packet of a designated home address of the MN, and disabling routing control refers to disabling routing control on the designated home address of the MN. When descriptions are made from the perspective of the MN granularity, enabling routing control refers to enabling routing control for all data packets of the MN, and disabling routing control refers to disabling routing control for all the data packets of the MN.

Preferably, in this embodiment of the present invention, the indication information includes status information of the MN and status information of a designated home address, and the routing control policy information further includes a home address of the MN.

In this case, if the status information of the MN indicates disabling of routing control, and status information of the designated routing node indicates enabling of routing control for the first home address, the indication information indicates enabling of routing control for a data packet of the first home address of the MN, where the first home address is one of home addresses of the MN in the routing control policy information.

In this case, if the status information of the MN indicates disabling of routing control, and the status information of the designated routing node indicates disabling of routing control for a second home address, the indication information indicates disabling of routing control for a data packet of the second home address of the MN, where the second home address is one of home addresses of the MN in the routing control policy information.

That is, in this case, enabling of routing control and disabling of routing control are both for a specific IP, and specifically for a particular home address of the MN.

Preferably, in this embodiment of the present invention, there are one or more home addresses of the MN.

Preferably, in this embodiment of the present invention, from the perspective of the MN granularity, the indication information includes status information of the MN.

In this case, if the status information of the MN indicates enabling of routing control, the indication information indicates enabling of routing control for all the data packets of the MN.

In this case, if the status information of the MN indicates disabling of routing control, the indication information indicates disabling of routing control for all the data packets of the MN.

That is, in this case, enabling of routing control and disabling of routing control are for the MN.

Step 2A03: The first mobile router sends the first data packet to a current mobile router of a correspondent node by using a first link, where the first link includes a first tunnel from the first mobile router to a second mobile router and a second tunnel from the second mobile router to the current mobile router of the correspondent node, and the second mobile router is a mobile router to which the MN is previously attached.

In this embodiment of the present invention, the second mobile router may also be referred to as a designated mobile router, that is, a designated routing node that a data packet needs to pass through.

In this embodiment of the present invention, specially, if the designated mobile router is the mobile router to which the MN is currently attached, because the first data packet does not need to be sent to the designated mobile router from the mobile router to which the MN is currently attached, the first tunnel does not need to be established.

Preferably, in this embodiment of the present invention, if the designated mobile router is not the mobile router to which the MN is currently attached, but is a mobile router to which the MN has been attached, the first tunnel needs to be established. Preferably, the first tunnel may be established after the routing control policy information is obtained.

Preferably, in this embodiment of the present invention, before the receiving, by a first mobile router, a first data packet that is forwarded by the MN and includes a first home address, the method may further include: obtaining, by the first mobile router, the routing control policy information, where the routing control policy information includes address information of the second mobile router; and establishing, by the first mobile router, the first tunnel according to the address information of the second mobile router. When the routing control policy information indicates enabling of routing control, the routing control policy information further includes the address information of the second mobile router.

Preferably, in this embodiment of the present invention, a manner in which the first mobile router obtains the routing control policy information may be: when the MN is attached to the first mobile router, obtaining, by the first mobile router, the routing control policy information from a home location manager of the MN; and when it is determined, according to the routing control policy information, to enable routing control, establishing the first tunnel according to the address information of the designated mobile router.

There may be two stages.

### Stage 1:

First, the MN attaches to a mobile router 1. A current location manager of the MN receives a routing control request, where the routing control request includes the routing control policy information. In this case, the current location manager of the MN is a location manager that provides a service for the mobile router 1. Alternatively, the mobile router 1 directly receives the routing control request.

If the current location manager of the MN receives the routing control request, the current location manager of the MN determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request, and after the authentication succeeds, forwards the routing control request to the mobile router 1.

If the mobile router 1 receives the routing control request, the mobile router 1 determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request. After the authentication succeeds, the mobile router 1 initiates an update procedure to the home location manager of the MN.

In this case, the indication information in the routing control policy information indicates enabling of routing control, and it is determined, according to the address information of the second mobile router, that the second mobile router is the mobile router 1.

The mobile router 1 initiates an update procedure (PBU) to the home location manager of the MN, to update, according to the routing control policy information, routing control policy information stored in the home location manager of the MN. The home location manager of the MN returns update acknowledgement information (PBA) to the mobile router 1. The home location manager of the MN is a location manager that provides a service for a home mobile router of the MN.

In this case, the data packet from the first home address or all data packets that pass through the MN are sent, by using the mobile router 1, to a mobile router to which the CN is currently attached, and then, are sent to the corresponding CN by the mobile router to which the CN is currently attached.

### Stage 2:

The MN is moved, and is moved from the mobile router 1 to a mobile router 2, the mobile router to which the MN is currently attached is changed to the mobile router 2, and the mobile router 1 becomes the mobile router to which the MN has been attached.

In this case, the mobile router 2 may send a PBU request to the home location manager of the MN, where the PBU request includes an address of the mobile router 2. The home location manager of the MN responds to the mobile router 2 with a PBA message, and sends the routing control policy information to the mobile router 2, where the routing control policy information includes the address information of the second mobile router.

Then, the mobile router 2 establishes the first tunnel to the second mobile router according to the address information of the second mobile router.

Preferably, in this embodiment of the present invention, a manner in which the first mobile router obtains the routing control policy information may be: when the MN is attached to the first mobile router, receiving, by the first mobile router, the routing control policy information and a tunnel establishment instruction that are sent by the MN; and establishing, by the first mobile router, the first tunnel according to the tunnel establishment instruction and the address information of the second mobile router in the routing control policy information.

There may be two stages.

### Stage 1:

First, the MN attaches to a mobile router 1. A current location manager of the MN receives a routing control request, where the routing control request includes the routing control policy information. In this case, the current location manager of the MN is a location manager that provides a service for the mobile router 1. Alternatively, the mobile router 1 directly receives the routing control request.

If the current location manager of the MN receives the routing control request, the current location manager of the MN determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request, and after the authentication succeeds, forwards the routing control request to the mobile router 1.

If the mobile router 1 receives the routing control request, the mobile router 1 determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request. After the authentication succeeds, the mobile router 1 sends the routing control policy information to the MN. If the MN previously stores routing control policy information, the MN updates the locally stored routing control policy information. If the MN does not store routing control policy information previously, the MN stores the routing control policy information locally.

In this case, the indication information in the routing control policy information indicates enabling of routing control, and it is determined, according to the address information of the second mobile router, that the second mobile router is the mobile router 1.

The mobile router 1 sends the routing control policy information to the MN, which is equivalent to initiating an update procedure to the MN, or to that the mobile router 1 may send an update request to the MN. If the MN previously stores routing control policy information, the MN performs an update procedure according to the update request, to update the locally stored routing control policy information. If the MN does not store routing control policy information previously, the MN stores the routing control policy information locally. The routing control policy information includes the address information of the mobile router 1.

In this case, the data packet from the first home address or all data packets that pass through the MN are sent, by using the mobile router 1, to a mobile router to which the CN is currently attached, and then, are sent to the corresponding CN by the mobile router to which the CN is currently attached.

### Stage 2:

The MN is moved, and is moved from the mobile router 1 to a mobile router 2, the mobile router to which the MN is currently attached is changed to the mobile router 2, and the mobile router 1 becomes the mobile router to which the MN has been attached.

In a process in which the MN attaches to the mobile router 2, the MN sends the routing control policy information to the mobile router 2, and also sends the tunnel establishment instruction to the mobile router 2 at the same time.

Then, the mobile router 2 executes the tunnel establishment instruction, and establishes the first tunnel to the second mobile router according to the address information of the second mobile router.

Preferably, in this embodiment of the present invention, after the establishing the first tunnel, the method may further include: triggering, by the first mobile router, the second mobile router to release a tunnel from the second mobile router to a source mobile router of the MN, where the source mobile router of the MN is a mobile router, except the second mobile router, in the mobile router to which the MN is previously attached.

A typical application scenario is: the second mobile router is the mobile router 1. The MN is first attached to the mobile router 1, then, is moved, and is attached to the mobile router 2. In this case, the mobile router 2 establishes a tunnel to the mobile router 1. Then, the MN is moved again and is attached to a mobile router 3. The mobile router 3 also needs to establish a tunnel to the mobile router 1, and after the tunnel to the mobile router 1 is established, may trigger the mobile router 1 to delete the tunnel to the mobile router 2, so as to ensure that a data packet can be transmitted in a correct path.

Preferably, in this embodiment of the present invention, a manner in which the first mobile router obtains the routing control policy information may be: receiving, by the first mobile router, a routing control request, where the routing control request includes the routing control policy information. Multiple different network entities may send the routing control request, which is not limited in the present invention.

Preferably, in this embodiment of the present invention, after the receiving, by the first mobile router, a routing control request, the method further includes: initiating, by the first mobile router, an update procedure to a home location manager of the MN, so that the home location manager of the MN updates, according to the routing control policy information carried in the routing control request, routing control policy information that is stored in the home location manager of the MN and corresponds to the MN.

Preferably, in this embodiment of the present invention, after the receiving, by the first mobile router, a routing control request, the method further includes: initiating, by the first mobile router, an update procedure to the MN, so that the MN updates, according to the routing control policy information carried in the routing control request, routing control policy information stored in the MN.

Preferably, in this embodiment of the present invention, if the routing control policy information indicates disabling of routing control, after the routing control policy request is obtained, the method may further include: when the routing control request indicates disabling of routing control, establishing a tunnel to the home mobile router of the MN, and establishing a tunnel to the current mobile router of the correspondent node.

Preferably, if the routing control policy information indicates disabling of routing control, after the routing control policy request is obtained, the second mobile router may release a tunnel between the second mobile router and the mobile router to which the CN is currently attached, and the second mobile router may release the tunnel between the second mobile router and the first mobile router, and may trigger the home mobile router of the MN to release a tunnel to the second mobile router.

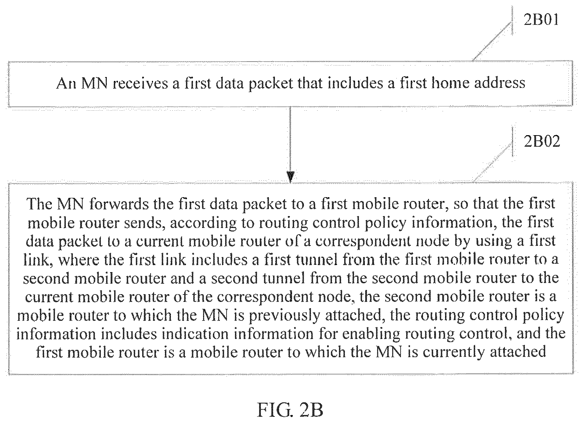

A second aspect of the present invention is as follows:
Referring to FIG. 2B, an embodiment of the present invention provides a data packet sending method, where the method may be applied to the MN. A main procedure of the method is as follows:
   Step 2B01: The MN receives a first data packet that includes a first home address.
   Step 2B02: The MN forwards the first data packet to a first mobile router, so that the first mobile router sends the first data packet to a current mobile router of a correspondent node by using a first link, where the first link includes a first tunnel from the first mobile router to a second mobile router and a second tunnel from the second mobile router to the current mobile router of the correspondent node, the second mobile router is a mobile router to which the MN is previously attached, the routing control policy information includes indication information for enabling routing control, and the first mobile router is a mobile router to which the MN is currently attached.

Preferably, in this embodiment of the present invention, before the forwarding, by the MN, the first data packet to the first mobile router, the method further includes: receiving, by the MN, an update request initiated by the first mobile router; and performing, by the MN, an update procedure according to the update request, to update, according to the received routing control policy information that is sent by the first mobile router, routing control policy information stored in the MN. The MN performs the update procedure after it is determined that the routing control policy information stored in the MN is inconsistent with the received routing control policy information. The update request may include the routing control policy information, or the first mobile router may send the routing control policy information to the MN by using another message before, when, or after the update request is sent.

Preferably, in this embodiment of the present invention, before the forwarding, by the MN, the first data packet to the first mobile router, the method further includes: in a process in which the MN attaches to the first mobile router, sending, by the MN, the routing control policy information and a tunnel establishment instruction to the first mobile router, so that the first mobile router establishes the first tunnel according to the routing control policy information.

The routing control policy information in this embodiment of the present invention is first described.

For example, the routing control policy information includes parameters such as {MNID, MN_status, HoAx, HoAx_Status}, and a sending party of the routing control request may be OAM (Operation Administration and Maintenance, operation, administration and maintenance), a lawful interception entity, or another network element.

MNID represents a unique identifier of the MN in a DMM network. MN_Status represents status information of the MN. When a value of MN_Status is 1, it indicates enabling of routing control, that is, a data packet that passes through the MN is routed to the designated mobile router. When a value of MN_Status is 0, it indicates disabling of routing control, that is, optimized routing is used for all data packets of the MN.

HoAx represents a home address that is allocated by a home mobile router of the MN to the MN, is generally expressed as an IP address, and when multiple home addresses are allocated to the MN, may be distinguished by using x. HoAx_Status indicates status information of a designated home address. When the value of MN_ Status is 0, and a value of HoAx _ Status is 1, it indicates enabling of routing control on the home address HoAx (that is, the IP), that is, a data packet from the home address HoAx is routed to the designated mobile router. When the value of MN_ Status is 0, and the value of HoAx _ Status is 0, it indicates disabling of routing control on the home address HoAx (that is, the IP), that is, route optimization is performed on the data packet from the home address HoAx. When the value of MN_ Status is 1, regardless of whether the value of HoAx _ Status is 0 or 1, it indicates enabling of routing control on the MN, that is, the data packet that passes through the MN is routed to the designated router.

Referring to Table 1, descriptions are made based on Table 1 in all embodiments of the present invention. Descriptions are made in the embodiments of the present invention from two perspectives: IP granularity and MN granularity.

**Table 1.**

| | **MN_status** | **HoAx_status** | **Meaning** |
|---|---|---|---|
| **IP granularity** | 0 | 1 | Enabling of routing control on HoAx data of an MN, where the data is routed to a designated mobile router, and route optimization is still performed on another service of the MN, that is, enabling of routing control |
| | 0 | 0 | Disabling of routing control on HoAx data of an MN so as to perform route optimization, where route optimization is still performed on another service of the MN, that is, disabling of routing control |
| **MN granularity** | 1 | / | Enabling of routing control on data of an MN, where the data is routed to a designated mobile router, that is, enabling of routing control |
| | 0 | / | Disabling of routing control on data of an MN so as to perform route optimization, that is, disabling of routing control |

The following describes the data packet sending method in the present invention by using several specific embodiments. Descriptions are made in the following embodiments separately from two perspectives: the IP granularity and the MN granularity.

In the embodiments of the present invention, when two CNs exist, a CN located at an upper part is CN1, and a CN located at a lower part is CN2.

### 1. IP granularity

### Embodiment 1

### Stage 1:

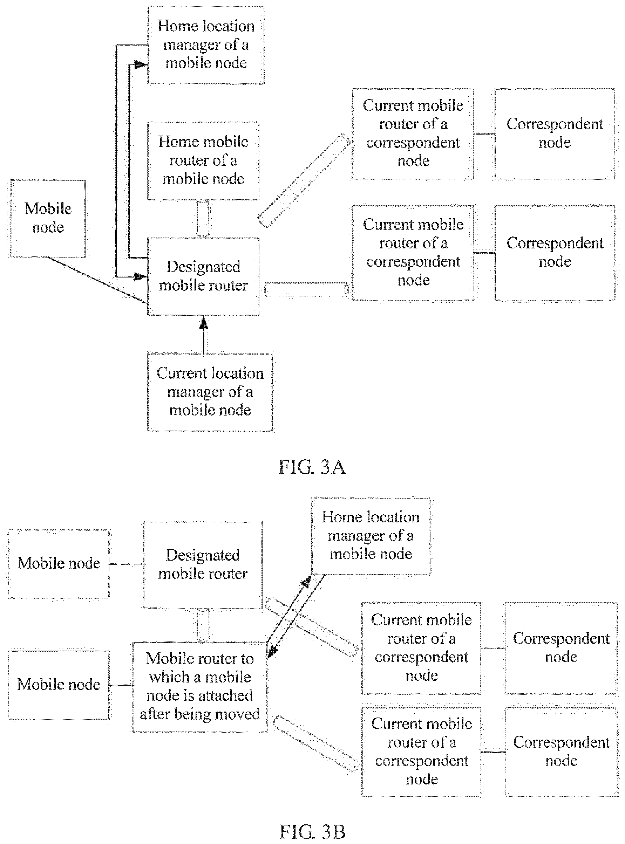

First, refer to FIG. 3A. The MN is attached to the mobile router 1, and a current location manager of the MN receives a routing control request, where the routing control request includes the routing control policy information, and the routing control policy information includes parameters such as {MNID, 0, HoA1, 1}. In this case, the current location manager of the MN is a location manager that provides a service for the mobile router 1.

It may be learned from Table 1 that, in this case, the routing control policy information indicates enabling of routing control on the data packet from the first home address. It is determined, according to address information of the second mobile router, that the second mobile router is the mobile router 1.

The current location manager of the MN determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request, and after the authentication succeeds, forwards the routing control request to the mobile router 1.

The mobile router 1 initiates an update procedure (PBU) to a home location manager of the MN, and the home location manager of the MN updates, according to the routing control policy information, routing control policy information stored in the home location manager of the MN. The home location manager of the MN returns update acknowledgement information (PBA) to the mobile router 1. The home location manager of the MN is a location manager that provides a service for the home mobile router of the MN.

In this case, the data packet from the first home address or all data packets that pass through the MN are sent, by using the mobile router 1, to a mobile router to which the CN is currently attached, and then, are sent to the corresponding CN by the mobile router to which the CN is currently attached.

### Stage 2:

Refer to FIG. 3B. The MN is moved, and is moved from the mobile router 1 to a mobile router 2, the mobile router to which the MN is currently attached is changed to the mobile router 2, and the mobile router 1 becomes a mobile router to which the MN has been attached.

In this case, the mobile router 2 may send a PBU request to the home location manager of the MN, where the PBU request includes an address of the mobile router 2. The home location manager of the MN determines whether the routing control policy information is consistent with locally stored routing control policy information; and if the routing control policy information is consistent with the locally stored routing control policy information, rejects update, responds to the mobile router 2 with a PBA message, and sends the routing control policy information to the mobile router 2, where the routing control policy information includes the address information of the second mobile router.

Then, the mobile router 2 establishes the first tunnel to the second mobile router according to the address information of the second mobile router.

In this case, the data packet from the first home address is returned to the second mobile router by using the mobile router 2, then, is sent, by using a tunnel between the second mobile router and a mobile router to which the CN1 is currently attached, to the mobile router to which the CN1 is currently attached, and is sent to the CN1 by the mobile router to which the CN1 is currently attached. However, enabling of route optimization is continued for other data of the MN; therefore, a data packet from a second home address (for example, expressed as HoA2) is not affected, and a current mobile router of the MN continues to send the data packet directly to a current mobile router of the CN2.

### Stage 3:

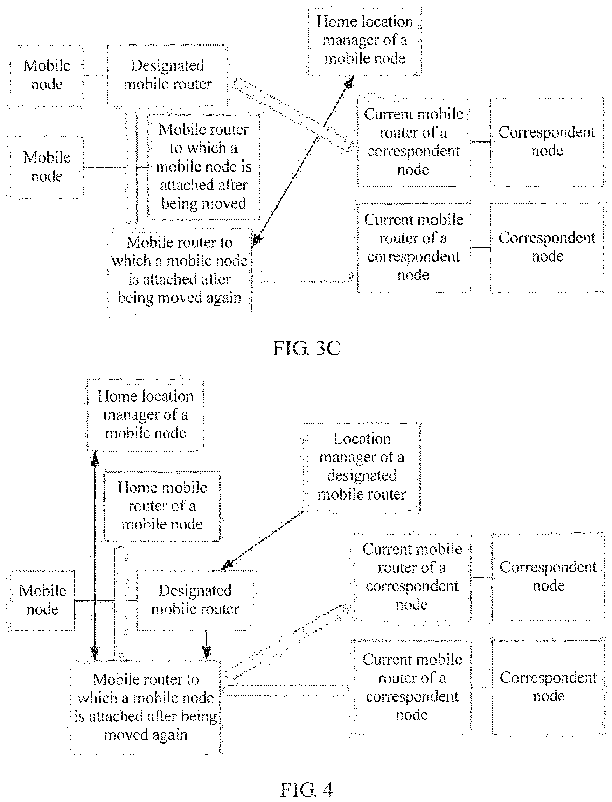

Refer to FIG. 3C. The MN is moved again, and is moved from the mobile router 2 to a mobile router 3, the mobile router to which the MN is currently attached is changed to the mobile router 3, and the mobile router 2 becomes the mobile router to which the MN has been attached.

In this case, the mobile router 3 may send a PBU request to the home location manager of the MN, where the PBU request includes an address of the mobile router 3. The home location manager of the MN determines whether the routing control policy information is consistent with locally stored routing control policy information; and if the routing control policy information is consistent with the locally stored routing control policy information, rejects update, responds to the mobile router 3 with a PBA message, and sends the routing control policy information to the mobile router 3, where the routing control policy information includes the address information of the second mobile router.

Then, the mobile router 3 establishes the first tunnel to the second mobile router according to the address information of the second mobile router.

In addition, the mobile router 1 releases the tunnel established at stage 2 between the mobile router 1 and the mobile router 2.

In this case, the data packet from the first home address is returned to the second mobile router by using the mobile router 3, then, is sent, by using the tunnel between the second mobile router and the mobile router to which the CN1 is currently attached, to the mobile router to which the CN1 is currently attached, and is sent to the CN1 by the mobile router to which the CN1 is currently attached. However, enabling of route optimization is continued for other data of the MN; therefore, the data packet from the second home address (for example, expressed as HoA2) is not affected, and the current mobile router of the MN continues to send the data packet directly to the current mobile router of the CN2.

### Embodiment 2

Referring to FIG. 4, an example in which the MN is currently attached to the mobile router 3 is described, that is, a procedure performed after routing control is enabled is described.

A location manager of the designated mobile router receives a routing control request, where the routing control request includes the routing control policy information, and the routing control policy information includes (MNID, 0, HoA1, 0). The location manager of the designated mobile router determines whether the routing control policy information is consistent with local routing control policy information; and if the routing control policy information is consistent with the local routing control policy information, discards the routing control request. If the routing control policy information is inconsistent with the local routing control policy information, the location manager of the designated mobile router performs authentication, and if the authentication succeeds, forwards the routing control request to the mobile router 3 by using the designated mobile router.

The mobile router 3 initiates an update procedure to the home location manager of the MN, to update address information that is stored in the home location manager of the MN and is of the mobile router to which the MN is currently attached. A previous address of the designated mobile router is updated to an address of the mobile router 3, and the routing control policy information stored in the home location manager of the MN is updated.

The home location manager of the MN returns an update acknowledgement message to the mobile router 3, which indicates successful update, and also returns an address of the home mobile router of the MN.

The mobile router 3 establishes a tunnel between the home mobile router of the MN and the mobile router 3.

The home mobile router of the MN releases a tunnel between the home mobile router of the MN and the second mobile router; then, the second mobile router releases the tunnel between the second mobile router and the mobile router to which the CN1 (a first correspondent node) is currently attached, and the second mobile router releases the tunnel between the second mobile router and the mobile router 3.

The mobile router 3 establishes a tunnel between the mobile router 3 and the mobile router to which the CN1 is currently attached.

In this case, the data packet from the first home address is sent, by using the mobile router 3, directly to the mobile router to which the CN1 is currently attached, and is sent to the CN1 by the mobile router to which the CN1 is currently attached. However, enabling of route optimization is continued for other data of the MN; therefore, the data packet from the second home address (for example, expressed as HoA2) is not affected, and the current mobile router of the MN (the mobile router 3) continues to send the data packet directly to the current mobile router of the CN2.

### Embodiment 3

### Stage 1:

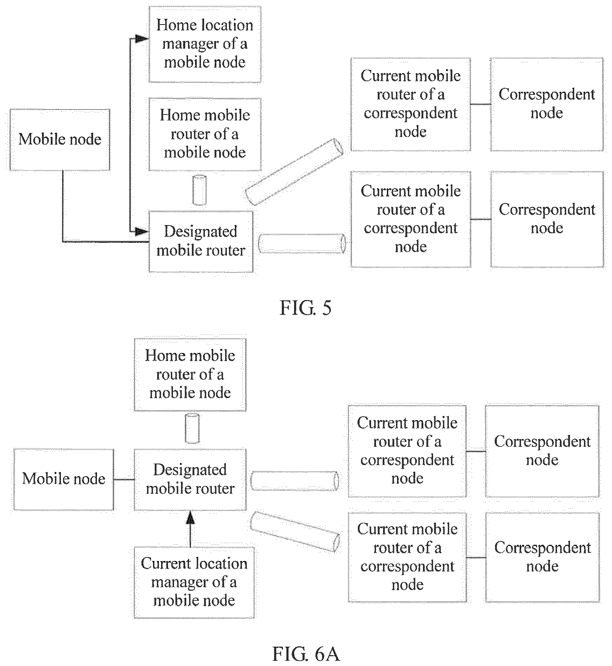

Referring to FIG. 5, the MN is attached to the mobile router 1, and the mobile router 1 receives the routing control request. The routing control request includes the routing control policy information, and the routing control policy information includes parameters such as {MNID, 0, HoA1, 1}.

It may be learned from Table 1 that, in this case, the routing control policy information indicates enabling of routing control on the data packet from the first home address. It is determined, according to address information of the second mobile router, that the second mobile router is the mobile router 1.

The mobile router 1 determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request. After the authentication succeeds, the mobile router 1 initiates an update procedure to the home location manager of the MN.

The mobile router 1 initiates an update procedure (PBU) to a home location manager of the MN, and the home location manager of the MN updates, according to the routing control policy information, routing control policy information stored in the home location manager of the MN. The home location manager of the MN returns update acknowledgement information (PBA) to the mobile router 1. The home location manager of the MN is a location manager that provides a service for the home mobile router of the MN.

In this case, the data packet from the first home address or all data packets that pass through the MN are sent, by using the mobile router 1, to a mobile router to which the CN is currently attached, and then, are sent to the corresponding CN by the mobile router to which the CN is currently attached.

Both stage 2 and stage 3 of this embodiment are the same as those of Embodiment 1, and a procedure of disabling routing control is the same as that of Embodiment 2. Details are not described.

### Embodiment 4

### Stage 1:

Refer to FIG. 6A. The MN is attached to the mobile router 1, and a current location manager of the MN receives a routing control request, where the routing control request includes the routing control policy information, and the routing control policy information includes parameters such as {MNID, 0, HoA1, 1}. In this case, the current location manager of the MN is a location manager that provides a service for the mobile router 1.

It may be learned from Table 1 that, in this case, the routing control policy information indicates enabling of routing control on the data packet from the first home address. It is determined, according to address information of the second mobile router, that the second mobile router is the mobile router 1.

The current location manager of the MN determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request, and after the authentication succeeds, forwards the routing control request to the mobile router 1.

The mobile router 1 sends the routing control policy information to the MN. If the MN does not store routing control policy information previously, the MN stores the routing control policy information locally. If the MN has previously stored routing control policy information, the MN updates the locally stored routing control policy information according to the received routing control policy information.

In this case, the data packet from the first home address or all data packets that pass through the MN are sent, by using the mobile router 1, to a mobile router to which the CN is currently attached, and then, are sent to the corresponding CN by the mobile router to which the CN is currently attached.

### Stage 2:

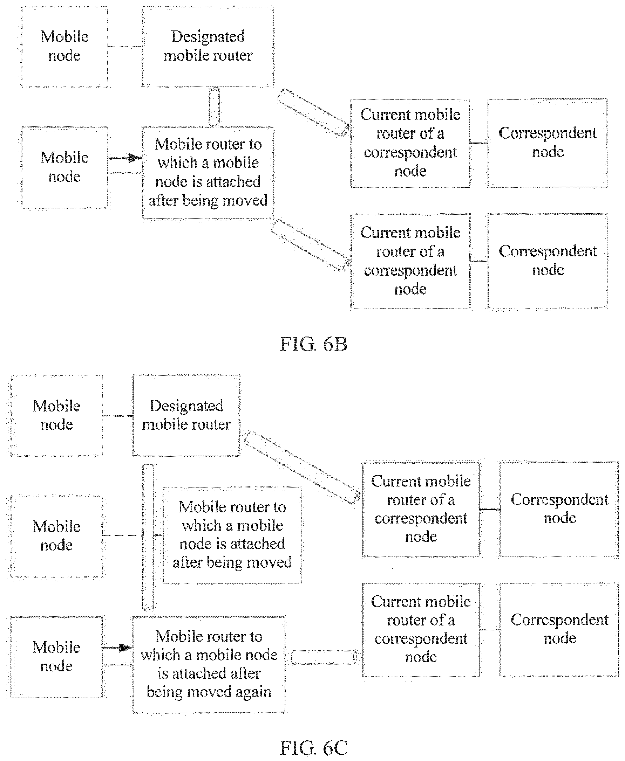

Refer to FIG. 6B. The MN is moved, and is moved from the mobile router 1 to a mobile router 2, the mobile router to which the MN is currently attached is changed to the mobile router 2, and the mobile router 1 becomes a mobile router to which the MN has been attached.

In a process in which the MN attaches to the mobile router 2, the MN sends the routing control policy information to the mobile router 2, and sends the tunnel establishment instruction to the mobile router 2 at the same time.

The mobile router 2 executes the tunnel establishment instruction, and establishes, according to the address information that is of the second mobile router and included in the routing control policy information, the first tunnel between the mobile router 2 and the second mobile router.

In this case, the data packet from the first home address is returned to the second mobile router by using the mobile router 2, then, is sent, by using a tunnel between the second mobile router and a mobile router to which the CN1 is currently attached, to the mobile router to which the CN1 is currently attached, and is sent to the CN1 by the mobile router to which the CN1 is currently attached. However, enabling of route optimization is continued for other data of the MN; therefore, a data packet from a second home address (for example, expressed as HoA2) is not affected, and a current mobile router of the MN continues to send the data packet directly to a current mobile router of the CN2.

### Stage 3:

Refer to FIG. 6C. The MN is moved again, and is moved from the mobile router 2 to a mobile router 3, the mobile router to which the MN is currently attached is changed to the mobile router 3, and the mobile router 2 becomes the mobile router to which the MN has been attached.

In a process in which the MN attaches to the mobile router 3, the MN sends the routing control policy information to the mobile router 3, and sends the tunnel establishment instruction to the mobile router 3 at the same time.

The mobile router 3 executes the tunnel establishment instruction, and establishes, according to the address information that is of the second mobile router and included in the routing control policy information, the first tunnel between the mobile router 3 and the second mobile router.

The second mobile router releases the tunnel between the second mobile router and the mobile router 2.

In this case, the data packet from the first home address is returned to the second mobile router by using the mobile router 3, then, is sent, by using the tunnel between the second mobile router and the mobile router to which the CN1 is currently attached, to the mobile router to which the CN1 is currently attached, and is sent to the CN1 by the mobile router to which the CN1 is currently attached. However, enabling of route optimization is continued for other data of the MN; therefore, the data packet from the second home address (for example, expressed as HoA2) is not affected, and the current mobile router of the MN continues to send the data packet directly to the current mobile router of the CN2.

### Embodiment 5

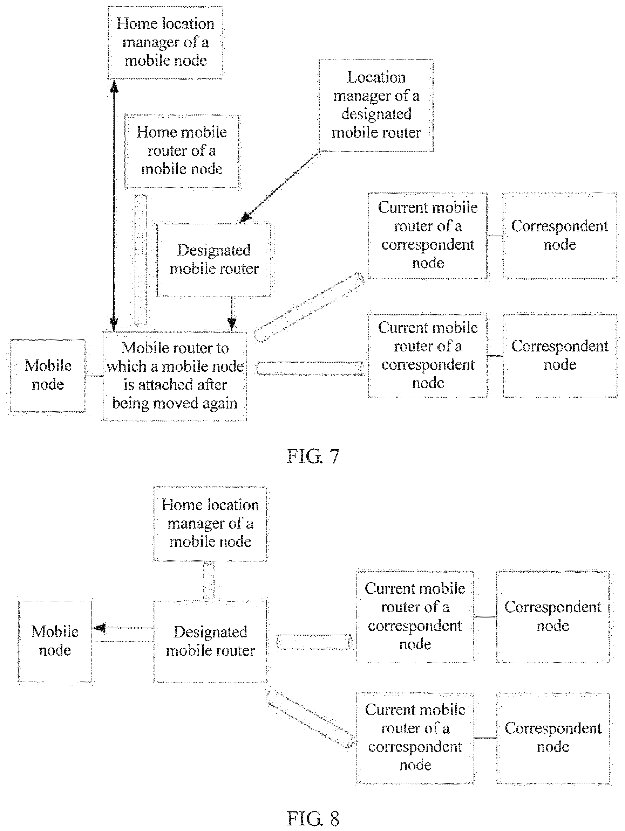

Referring to FIG. 7, an example in which the MN is currently attached to the mobile router 3 is described, that is, a procedure performed after routing control is enabled is described.

A location manager of the designated mobile router receives a routing control request, where the routing control request includes the routing control policy information, and the routing control policy information includes (MNID, 0, HoA1, 0). The location manager of the designated mobile router determines whether the routing control policy information is consistent with local routing control policy information; and if the routing control policy information is consistent with the local routing control policy information, discards the routing control request. If the routing control policy information is inconsistent with the local routing control policy information, the location manager of the second mobile router performs authentication, and if the authentication succeeds, forwards the routing control request to the mobile router 3 by using the second mobile router and also updates the routing control policy information to the MN at the same time.

The mobile router 3 initiates an update procedure to the home location manager of the MN, to update address information that is stored in the home location manager of the MN and is of the mobile router to which the MN is currently attached. A previous address of the second mobile router is updated to an address of the mobile router 3, and the routing control policy information stored in the home location manager of the MN is updated.

The home location manager of the MN returns an update acknowledgement message to the mobile router 3, which indicates successful update, and also returns an address of the home mobile router of the MN.

The mobile router 3 establishes a tunnel between the home mobile router of the MN and the mobile router 3.

The home mobile router of the MN releases a tunnel between the home mobile router of the MN and the second mobile router; then, the second mobile router releases the tunnel between the second mobile router and the mobile router to which the CN1 (a first correspondent node) is currently attached, and the second mobile router releases the tunnel between the second mobile router and the mobile router 3.

The mobile router 3 establishes a tunnel between the mobile router 3 and the mobile router to which the CN1 is currently attached.

In this case, the data packet from the first home address is sent, by using the mobile router 3, directly to the mobile router to which the CN1 is currently attached, and is sent to the CN1 by the mobile router to which the CN1 is currently attached. However, enabling of route optimization is continued for other data of the MN; therefore, the data packet from the second home address (for example, expressed as HoA2) is not affected, and the current mobile router of the MN (the mobile router 3) continues to send the data packet directly to the current mobile router of the CN2.

### Embodiment 6

### Stage 1:

Refer to FIG. 8. The MN is attached to the mobile router 1, and the mobile router 1 receives the routing control request. The routing control request includes the routing control policy information, and the routing control policy information includes parameters such as {MNID, 0, HoA1, 1}.

It may be learned from Table 1 that, in this case, the routing control policy information indicates enabling of routing control on the data packet from the first home address. It is determined, according to address information of the second mobile router, that the second mobile router is the mobile router 1.

The mobile router 1 determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request. After the authentication succeeds, the mobile router 1 sends the routing control policy information to the MN. If the MN does not store routing control policy information previously, the MN stores the routing control policy information locally. If the MN has previously stored routing control policy information, the MN updates the locally stored routing control policy information according to the received routing control policy information.

In this case, the data packet from the first home address or all data packets that pass through the MN are sent, by using the mobile router 1, to a mobile router to which the CN is currently attached, and then, are sent to the corresponding CN by the mobile router to which the CN is currently attached.

Both stage 2 and stage 3 of this embodiment are the same as those of Embodiment 5, and a procedure of disabling routing control is the same as that of Embodiment 6. Details are not described.
2. MN granularity: In the embodiments of the present invention, in the case of the MN granularity, an example in which there are two home addresses is used for description.

### Embodiment 7

### Stage 1:

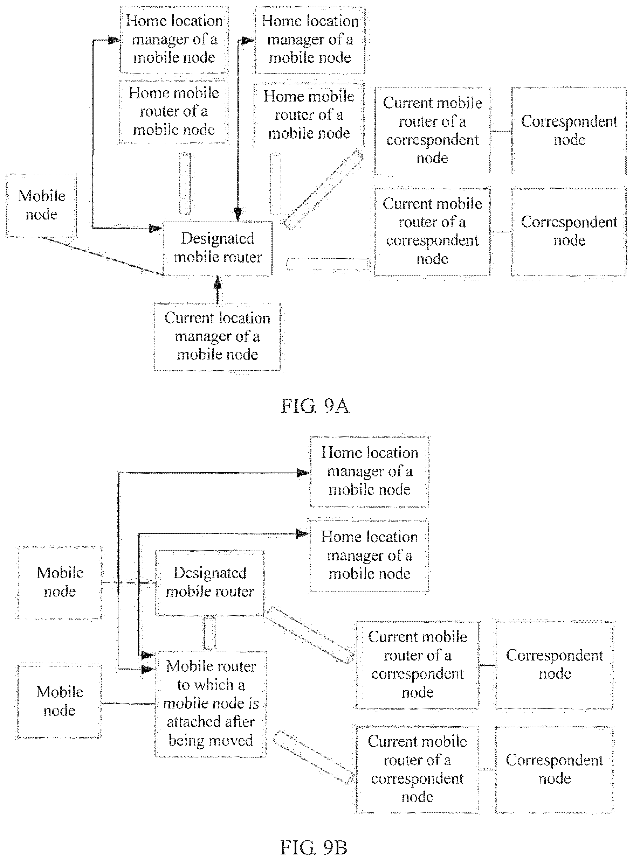

Refer to FIG. 9A. The MN is attached to the mobile router 1, and a current location manager of the MN receives a routing control request, where the routing control request includes the routing control policy information, and the routing control policy information includes parameters such as {MNID, 1}. In this case, the current location manager of the MN is a location manager that provides a service for the mobile router 1.

It may be learned from Table 1 that, in this case, the routing control policy information indicates enabling of routing control on all data packets that pass through the MN. It is determined, according to address information of the second mobile router, that the second mobile router is the mobile router 1.

The current location manager of the MN determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request, and after the authentication succeeds, forwards the routing control request to the mobile router 1.

The mobile router 1 initiates an update procedure (PBU) separately to a first home location manager of the MN and a second home location manager of the MN, and the first home location manager of the MN and the second home location manager of the MN separately update locally stored routing control policy information according to the routing control policy information. The first home location manager of the MN and the second home location manager of the MN separately return update acknowledgement information (PBA) to the mobile router 1.

In this case, all the data packets that pass through the MN are sent, by using the mobile router 1, to a mobile router to which the CN is currently attached, and then, are sent to the corresponding CN by the mobile router to which the CN is currently attached.

### Stage 2:

Refer to FIG. 9B. The MN is moved, and is moved from the mobile router 1 to a mobile router 2, the mobile router to which the MN is currently attached is changed to the mobile router 2, and the mobile router 1 becomes a mobile router to which the MN has been attached.

In this case, the mobile router 2 may send a PBU request separately to the first home location manager of the MN and the second home location manager of the MN, where the PBU request includes an address of the mobile router 2. The first home location manager of the MN and the second home location manager of the MN separately determine whether the routing control policy information is consistent with locally stored routing control policy information; and if the routing control policy information is consistent with the locally stored routing control policy information, reject update, separately respond to the mobile router 2 with PBA messages, and send the routing control policy information to the mobile router 2, where the routing control policy information includes the address information of the second mobile router.

Then, the mobile router 2 establishes the first tunnel to the second mobile router according to the address information of the designated mobile router.

In this case, all the data packets that pass through the MN are returned to the second mobile router by using the mobile router 2, then, are sent, by using a tunnel between the second mobile router and a mobile router to which the CN is currently attached, to the mobile router to which the CN is currently attached, and are sent to the CN by the mobile router to which the CN is currently attached.

### Stage 3:

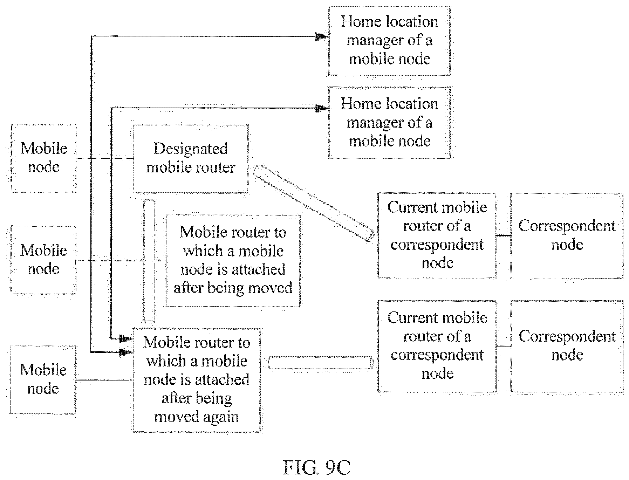

Refer to FIG. 9C. The MN is moved again, and is moved from the mobile router 2 to a mobile router 3, the mobile router to which the MN is currently attached is changed to the mobile router 3, and the mobile router 2 becomes the mobile router to which the MN has been attached.

In this case, the mobile router 3 may send a PBU request separately to the first home location manager of the MN and the second home location manager of the MN, where the PBU request includes an address of the mobile router 3. The first home location manager of the MN and the second home location manager of the MN separately determine whether the routing control policy information is consistent with locally stored routing control policy information; and if the routing control policy information is consistent with the locally stored routing control policy information, reject update, respond to the mobile router 3 with PBA messages, and send the routing control policy information to the mobile router 3, where the routing control policy information includes the address information of the second mobile router.

Then, the mobile router 3 establishes the first tunnel to the second mobile router according to the address information of the second mobile router.

In addition, the mobile router 1 releases the tunnel established at stage 2 between the mobile router 1 and the mobile router 2.

In this case, all the data packets that pass through the MN are returned to the second mobile router by using the mobile router 3, then, are sent, by using the tunnel between the second mobile router and the mobile router to which the CN is currently attached, to the mobile router to which the CN is currently attached, and are sent to the CN by the mobile router to which the CN is currently attached. An example in which the CN includes a CN1 and a CN2 is used for description in the embodiment of the NN granularity.

### Embodiment 8

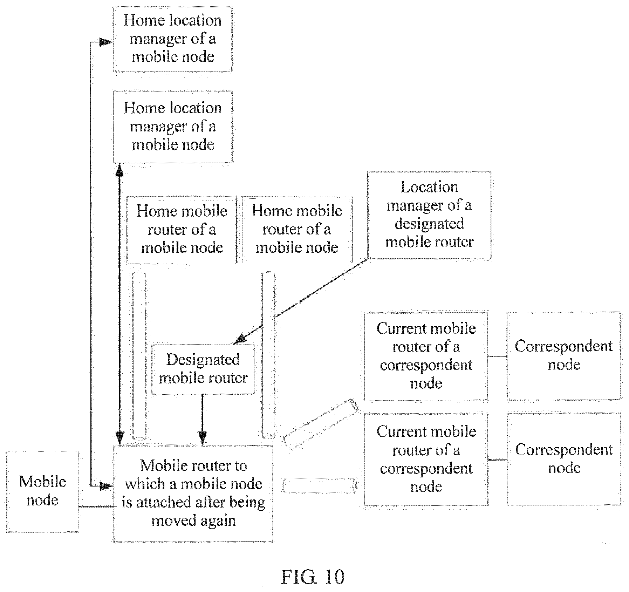

Referring to FIG. 10, an example in which the MN is currently attached to the mobile router 3 is described, that is, a procedure performed after routing control is enabled is described.

A location manager of the second mobile router receives a routing control request, where the routing control request includes the routing control policy information, and the routing control policy information includes (MNID, 0). The location manager of the designated mobile router determines whether the routing control policy information is consistent with local routing control policy information; and if the routing control policy information is consistent with the local routing control policy information, discards the routing control request. If the routing control policy information is inconsistent with the local routing control policy information, the location manager of the designated mobile router performs authentication, and if the authentication succeeds, forwards the routing control request to the mobile router 3 by using the second mobile router.

The mobile router 3 initiates an update procedure separately to the first home location manager of the MN and the second home location manager of the MN, to update address information that is stored in the first home location manager of the MN and the second home location manager of the MN and is of the mobile router to which the MN is currently attached. A previous address of the second mobile router is updated to an address of the mobile router 3, and routing control policy information that is stored in the first home location manager of the MN and the second home location manager of the MN is updated.

The first home location manager of the MN and the second home location manager of the MN return update acknowledgement messages to the mobile router 3, which indicates successful update, and also return an address of the home mobile router of the MN.

The mobile router 3 establishes a tunnel between the home mobile router of the MN and the mobile router 3.

The home mobile router of the MN releases a tunnel between the home mobile router of the MN and the second mobile router; then, the second mobile router releases the tunnel between the second mobile router and the mobile router to which the CN1 (a first correspondent node) is currently attached, and the second mobile router releases the tunnel between the second mobile router and the mobile router 3.

The mobile router 3 establishes a tunnel between the mobile router 3 and the mobile router to which the CN is currently attached.

In this case, all the data packets that pass through the MN are sent, by using the mobile router 3, directly to the mobile router to which the CN is currently attached, and are sent to the CN by the mobile router to which the CN is currently attached.

### Embodiment 9

### Stage 1:

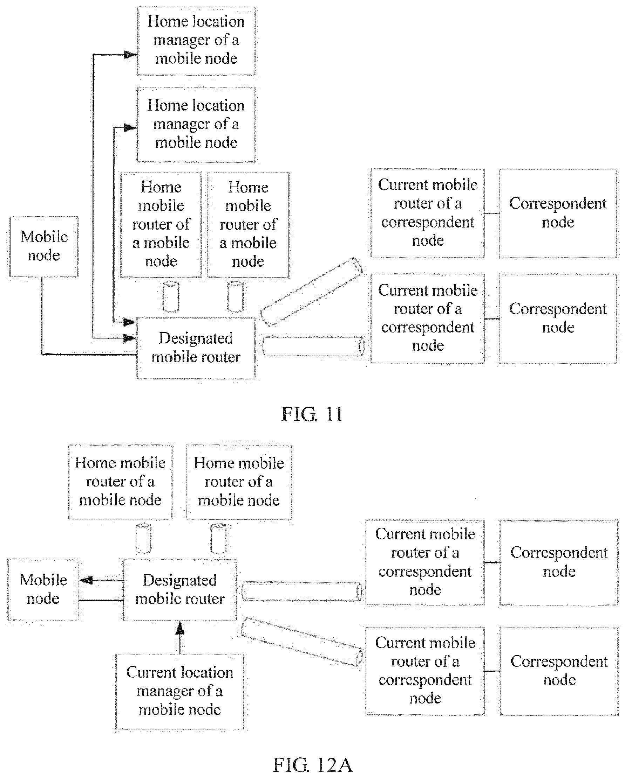

Referring to FIG. 11, the MN is attached to the mobile router 1, and the mobile router 1 receives the routing control request. The routing control request includes the routing control policy information, and the routing control policy information includes parameters such as {MNID, 1}.

It may be learned from Table 1 that, in this case, the routing control policy information indicates enabling of routing control on all data packets that pass through the MN. It is determined, according to address information of the second mobile router, that the second mobile router is the mobile router 1.

The mobile router 1 determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request. After the authentication succeeds, the mobile router 1 initiates an update procedure separately to the first home location manager of the MN and the second home location manager of the MN.

The first home location manager of the MN and the second home location manager of the MN separately update, according to the routing control policy information, routing control policy information stored in the home location manager of the MN. The first home location manager of the MN and the second home location manager of the MN return update acknowledgement information (PBA) to the mobile router 1.

Alternatively, in this case, all the data packets that pass through the MN are sent, by using the mobile router 1, to a mobile router to which the CN is currently attached, and then, are sent to the corresponding CN by the mobile router to which the CN is currently attached.

Both stage 2 and stage 3 of this embodiment are the same as those of Embodiment 7, and a procedure of disabling routing control is the same as that of Embodiment 8. Details are not described.

### Embodiment 10

### Stage 1:

Refer to FIG. 12A. The MN is attached to the mobile router 1, and a current location manager of the MN receives a routing control request, where the routing control request includes the routing control policy information, and the routing control policy information includes parameters such as {MNID, 1}.

It may be learned from Table 1 that, in this case, the routing control policy information indicates enabling of routing control on all data packets that pass through the MN. It is determined, according to address information of the second mobile router, that the second mobile router is the mobile router 1.

The current location manager of the MN determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request, and after the authentication succeeds, forwards the routing control request to the mobile router 1.

The mobile router 1 sends the routing control policy information to the MN. If the MN does not store routing control policy information previously, the MN stores the routing control policy information locally. If the MN has previously stored routing control policy information, the MN updates the locally stored routing control policy information according to the received routing control policy information.

In this case, all the data packets that pass through the MN are sent, by using the mobile router 1, to a mobile router to which the CN is currently attached, and then, are sent to the corresponding CN by the mobile router to which the CN is currently attached.

### Stage 2:

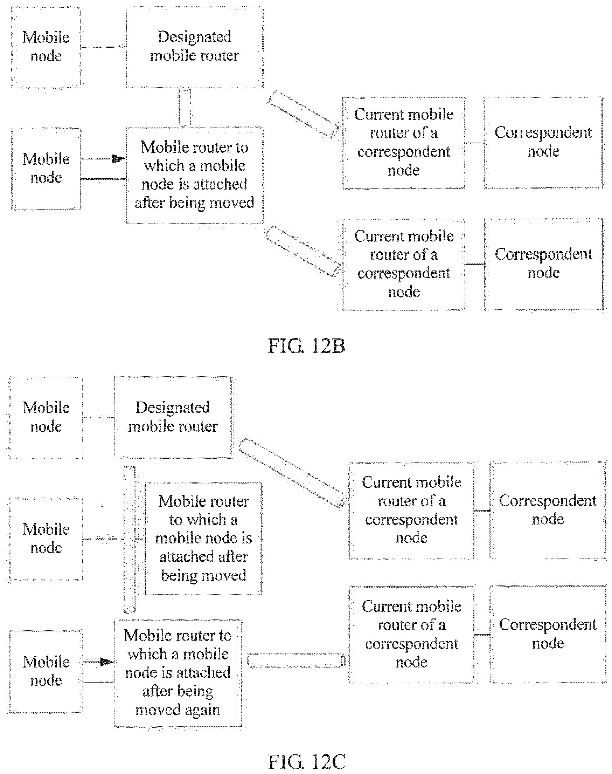

Refer to FIG. 12B. The MN is moved, and is moved from the mobile router 1 to a mobile router 2, the mobile router to which the MN is currently attached is changed to the mobile router 2, and the mobile router 1 becomes a mobile router to which the MN has been attached.

In a process in which the MN attaches to the mobile router 2, the MN sends the routing control policy information to the mobile router 2, and sends the tunnel establishment instruction to the mobile router 2 at the same time.

The mobile router 2 executes the tunnel establishment instruction, and establishes, according to the address information that is of the second mobile router and included in the routing control policy information, the first tunnel between the mobile router 2 and the second mobile router.

In this case, all the data packets that pass through the MN are returned to the second mobile router by using the mobile router 2, then, are sent, by using a tunnel between the designated mobile router and a mobile router to which the CN is currently attached, to the mobile router to which the CN is currently attached, and are sent to the CN by the mobile router to which the CN is currently attached.

### Stage 3:

Refer to FIG. 12C. The MN is moved again, and is moved from the mobile router 2 to a mobile router 3, the mobile router to which the MN is currently attached is changed to the mobile router 3, and the mobile router 2 becomes the mobile router to which the MN has been attached.

In a process in which the MN attaches to the mobile router 3, the MN sends the routing control policy information to the mobile router 3, and sends the tunnel establishment instruction to the mobile router 3 at the same time.

The mobile router 3 executes the tunnel establishment instruction, and establishes, according to the address information that is of the second mobile router and included in the routing control policy information, the first tunnel between the mobile router 3 and the second mobile router.

The second mobile router releases the tunnel between the second mobile router and the mobile router 2.

In this case, all the data packets that pass through the MN are returned to the second mobile router by using the mobile router 3, then, are sent, by using the tunnel between the second mobile router and the mobile router to which the CN is currently attached, to the mobile router to which the CN is currently attached, and are sent to the CN by the mobile router to which the CN is currently attached.

### Embodiment 11

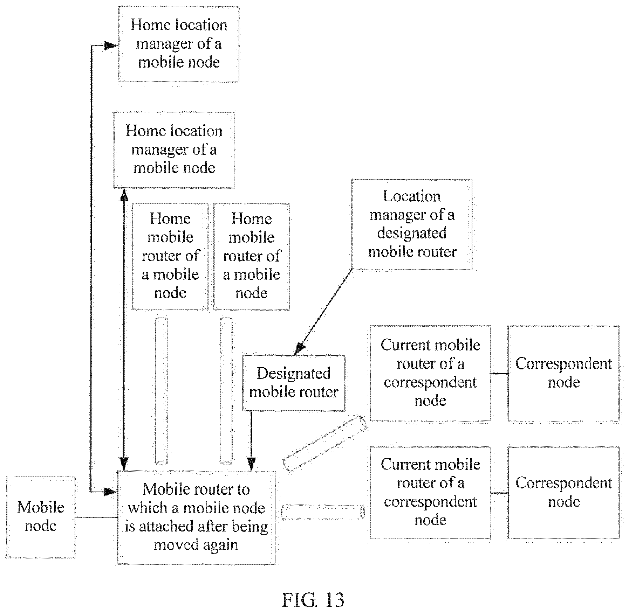

Referring to FIG. 13, an example in which the MN is currently attached to the mobile router 3 is described, that is, a procedure performed after routing control is enabled is described.

A location manager of the second mobile router receives a routing control request, where the routing control request includes the routing control policy information, and the routing control policy information includes (MNID, 0). The location manager of the second mobile router determines whether the routing control policy information is consistent with local routing control policy information; and if the routing control policy information is consistent with the local routing control policy information, discards the routing control request. If the routing control policy information is inconsistent with the local routing control policy information, the location manager of the second mobile router performs authentication, and if the authentication succeeds, forwards the routing control request to the designated mobile router by using the second mobile router and also updates the routing control policy information to the MN at the same time.

The mobile router 3 initiates an update procedure separately to the first home location manager of the MN and the second home location manager of the MN, to update address information that is stored in the first home location manager of the MN and the second home location manager of the MN and is of the mobile router to which the MN is currently attached. A previous address of the second mobile router is updated to an address of the mobile router 3, and routing control policy information that is stored in the first home location manager of the MN and the second home location manager of the MN is updated.

The first home location manager of the MN and the second home location manager of the MN separately return update acknowledgement messages to the mobile router 3, which indicates successful update, and also return an address of a first home mobile router of the MN and an address of a second home mobile router of the MN, respectively.

The mobile router 3 establishes a tunnel between the first home mobile router of the MN and the mobile router 3, and a tunnel between the second home mobile router of the MN and the mobile router 3.

The first home mobile router of the MN releases a tunnel between the first home mobile router of the MN and the designated mobile router; the second home mobile router of the MN releases a tunnel between the second home mobile router of the MN and the second mobile router; then, the second mobile router releases a tunnel between the designated mobile router and a mobile router to which the CN1 is currently attached, and the second mobile router releases the tunnel between the second mobile router and the mobile router 3.

The mobile router 3 establishes a tunnel between the mobile router 3 and the mobile router to which the CN1 is currently attached.

In this case, all the data packets that pass through the MN are sent, by using the mobile router 3, directly to the mobile router to which the CN1 is currently attached, and are sent to the CN1 by the mobile router to which the CN1 is currently attached.

### Embodiment 12

### Stage 1:

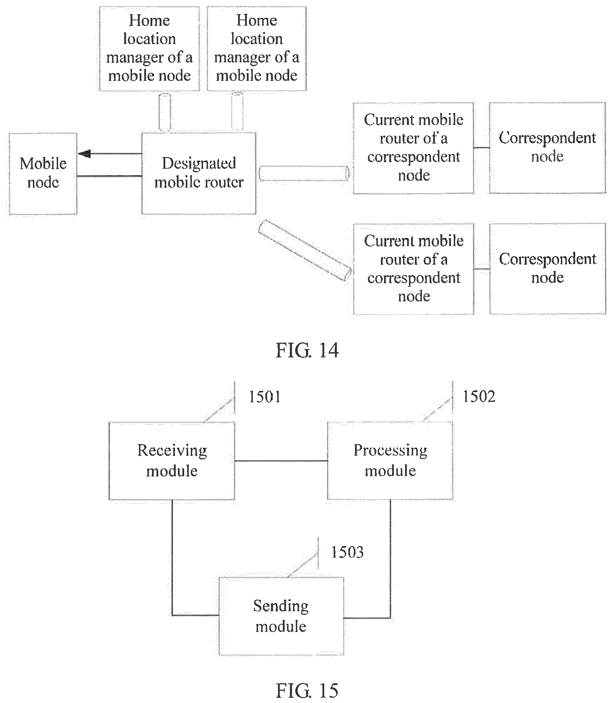

Referring to FIG. 14, the MN is attached to the mobile router 1, and the mobile router 1 receives the routing control request. The routing control request includes the routing control policy information, and the routing control policy information includes parameters such as {MNID, 1}.

It may be learned from Table 1 that, in this case, the routing control policy information indicates enabling of routing control on all data packets that pass through the MN. It is determined, according to address information of the second mobile router, that the second mobile router is the mobile router 1.

The mobile router 1 determines whether the routing control policy information is consistent with locally stored routing control policy information; and if the routing control policy information is consistent with the locally stored routing control policy information, discards the routing control request; or if the routing control policy information is inconsistent with the locally stored routing control policy information, performs authentication on the routing control request. After the authentication succeeds, the mobile router 1 sends the routing control policy information to the MN. If the MN does not store routing control policy information previously, the MN stores the routing control policy information locally. If the MN has previously stored routing control policy information, the MN updates the locally stored routing control policy information according to the received routing control policy information.

In this case, all the data packets that pass through the MN are sent, by using the mobile router 1, to a mobile router to which the CN is currently attached, and then, are sent to the corresponding CN by the mobile router to which the CN is currently attached.

Both stage 2 and stage 3 of this embodiment are the same as those of Embodiment 10, and a procedure of disabling routing control is the same as that of Embodiment 11. Details are not described.

A third aspect of the present invention is as follows:
Referring to FIG. 15, based on a same invention conception, an embodiment of the present invention provides a mobile router, where the mobile router may include a receiving module 1501, a processing module 1502, and a sending module 1503. Preferably, the mobile router is a mobile router to which the MN is currently attached.

The receiving module 1501 may be configured to receive a first data packet that is forwarded by the MN and includes a first home address, where the first mobile router is a mobile router to which the MN is currently attached.

The processing module 1502 may be configured to determine, according to routing control policy information, to enable routing control on the first data packet, where the routing control policy information includes indication information for enabling routing control.

The sending module 1503 may be configured to send the first data packet to a current mobile router of a correspondent node by using a first link, where the first link includes a first tunnel from the first mobile router to a second mobile router and a second tunnel from the second mobile router to the current mobile router of the correspondent node, and the second mobile router is a mobile router to which the MN is previously attached.

Preferably, the mobile router may further include an establishment module that is separately connected to the receiving module 1501, the processing module 1502, and the sending module 1503.

The receiving module 1501 may further be configured to obtain the routing control policy information, where the routing control policy information includes address information of the second mobile router.

The establishment module may be configured to establish the first tunnel according to the address information of the second mobile router.

Preferably, the receiving module 1501 may be specifically configured to: when the MN is attached to the first mobile router, obtain the routing control policy information from a home location manager of the MN.

Preferably, the receiving module 1501 may be specifically configured to: when the MN is attached to the first mobile router, receive the routing control policy information and a tunnel establishment instruction that are sent by the MN; and the establishment module may be specifically configured to establish the first tunnel according to the tunnel establishment instruction and the address information of the second mobile router.

Preferably, the processing module 1502 may further be configured to trigger the second mobile router to release a tunnel from the second mobile router to a source mobile router of the MN, where the source mobile router of the MN is a mobile router, except the second mobile router, in the mobile router to which the MN is previously attached.

Preferably, the receiving module 1501 may be configured to receive a routing control request, where the routing control request includes the routing control policy information.

Preferably, the processing module 1502 may further be configured to initiate an update procedure to a home location manager of the MN, so that the home location manager of the MN updates, according to the routing control policy information carried in the routing control request, routing control policy information that is stored in the home location manager of the MN and corresponds to the MN.

Preferably, the processing module 1502 may further be configured to initiate an update procedure to the MN, so that the MN updates, according to the routing control policy information carried in the routing control request, routing control policy information stored in the MN.

Preferably, the enabling routing control refers to enabling routing control on a designated home address of the MN, and disabling routing control refers to disabling routing control on the designated home address of the MN. Alternatively, the enabling routing control refers to enabling routing control on all data packets of the MN, and disabling routing control refers to disabling routing control on all the data packets of the MN.

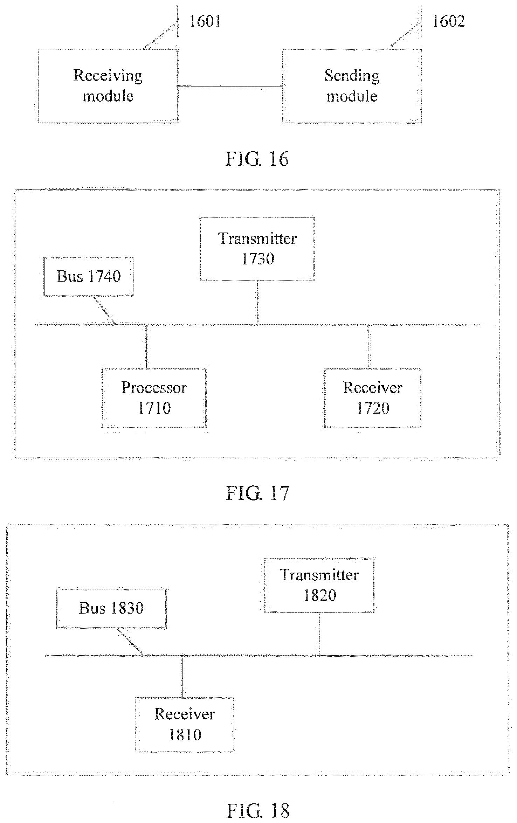

A fourth aspect of the present invention is as follows:
Referring to FIG. 16, based on a same invention conception, an embodiment of the present invention provides a mobile node, where the mobile node may include a receiving module 1601 and a sending module 1602. Preferably, the mobile node is the MN.

The receiving module 1601 may be configured to receive a first data packet that includes a first home address.

The sending module 1602 may be configured to forward the first data packet to a first mobile router, so that the first mobile router sends the first data packet to a current mobile router of a correspondent node by using a first link, where the first link includes a first tunnel from the first mobile router to a second mobile router and a second tunnel from the second mobile router to the current mobile router of the correspondent node, the second mobile router is a mobile router to which the mobile node is previously attached, the routing control policy information includes indication information for enabling routing control, and the first mobile router is a mobile router to which the mobile node is currently attached.

Preferably, the receiving module 1601 may further be configured to receive an update request initiated by the first mobile router; and the mobile node may further include a second processing module, configured to perform an update procedure according to the update request, to update, according to the received routing control policy information that is sent by the first mobile router, routing control policy information stored in the MN.

Preferably, the sending module 1602 may further be configured to: in a process in which the mobile node attaches to the first mobile router, send the routing control policy information and a tunnel establishment instruction to the first mobile router, so that the first mobile router establishes the first tunnel according to the routing control policy information.

A fifth aspect of the present invention is as follows:
Referring to FIG. 17, based on a same invention conception, an embodiment of the present invention provides a mobile router, where the mobile router may be a mobile router to which the MN is currently attached. The mobile router includes: a bus 1740, and a processor 1710, a receiver 1720, and a transmitter 1730 that are connected to the bus 1740. The receiver 1720 is configured to receive a first data packet that is forwarded by the MN and includes a first home address, where the first mobile router is a mobile router to which the MN is currently attached; the processor 1710 is configured to determine, according to routing control policy information, to enable routing control on the first data packet, where the routing control policy information includes indication information for enabling routing control; and the transmitter 1730 is configured to send the first data packet to a current mobile router of a correspondent node by using a first link, where the first link includes a first tunnel from the first mobile router to a second mobile router and a second tunnel from the second mobile router to the current mobile router of the correspondent node, and the second mobile router is a mobile router to which the MN is previously attached.

Preferably, in this embodiment of the present invention, the receiver 1720 is further configured to obtain the routing control policy information, where the routing control policy information includes address information of the second mobile router; and establish the first tunnel according to the address information of the second mobile router.

Preferably, in this embodiment of the present invention, the receiver 1720 is specifically configured to: when the MN is attached to the first mobile router, obtain the routing control policy information from a home location manager of the MN.

Preferably, in this embodiment of the present invention, the receiver 1720 is specifically configured to: when the MN is attached to the first mobile router, receive, by using the receiver, the routing control policy information and a tunnel establishment instruction that are sent by the MN; and the processor 1710 is further specifically configured to establish the first tunnel according to the tunnel establishment instruction and the address information of the second mobile router.

Preferably, in this embodiment of the present invention, the processor 1710 is further configured to trigger the second mobile router to release a tunnel from the second mobile router to a source mobile router of the MN, where the source mobile router of the MN is a mobile router, except the second mobile router, in the mobile router to which the MN is previously attached.

Preferably, in this embodiment of the present invention, the receiver 1720 is further configured to receive a routing control request, where the routing control request includes the routing control policy information.

Preferably, in this embodiment of the present invention, the processor 1710 is further configured to initiate an update procedure to a home location manager of the MN, so that the home location manager of the MN updates, according to the routing control policy information carried in the routing control request, routing control policy information that is stored in the home location manager of the MN and corresponds to the MN.

Preferably, in this embodiment of the present invention, the processor 1710 is further configured to initiate an update procedure to the MN, so that the MN updates, according to the routing control policy information carried in the routing control request, routing control policy information stored in the MN.

Preferably, in this embodiment of the present invention, the enabling routing control refers to enabling routing control on a designated home address of the MN, and disabling routing control refers to disabling routing control on the designated home address of the MN. Alternatively, the enabling routing control refers to enabling routing control on all data packets of the MN, and disabling routing control refers to disabling routing control on all the data packets of the MN.

A sixth aspect of the present invention is as follows:
Referring to FIG. 18, based on a same invention conception, an embodiment of the present invention provides a mobile node, where the mobile node is the MN. The mobile node includes: a bus 1830, and a receiver 1810 and a transmitter 1820 that are connected to the bus 1830. The receiver 1820 is configured to receive a first data packet that includes a first home address; and a transmitter 1820 is configured to forward the first data packet to a first mobile router, so that the first mobile router sends the first data packet to a current mobile router of a correspondent node by using a first link, where the first link includes a first tunnel from the first mobile router to a second mobile router and a second tunnel from the second mobile router to the current mobile router of the correspondent node, the second mobile router is a mobile router to which the mobile node is previously attached, the routing control policy information includes indication information for enabling routing control, and the first mobile router is a mobile router to which the mobile node is currently attached.

Preferably, in this embodiment of the present invention, the receiver 1810 is further configured to receive an update request initiated by the first mobile router; and the mobile node further includes a processor that is connected to the bus 1830. The processor may be configured to perform an update procedure according to the update request, to update, according to the received routing control policy information that is sent by the first mobile router, routing control policy information stored in the MN.

Preferably, in this embodiment of the present invention, the transmitter 1820 is further configured to: in a process in which the mobile node attaches to the first mobile router, send the routing control policy information and a tunnel establishment instruction to the first mobile router, so that the first mobile router establishes the first tunnel according to the routing control policy information.

The data packet sending method in the embodiments of the present invention may be applied to a mobile router to which an MN is currently attached, where the method may include: receiving, by a first mobile router, a first data packet that is forwarded by the mobile node MN and includes a first home address, where the first mobile router is the mobile router to which the MN is currently attached; determining, by the first mobile router according to routing control policy information, to enable routing control on the first data packet, where the routing control policy information includes indication information for enabling routing control; and sending, by the first mobile router, the first data packet to a current mobile router of a correspondent node by using a first link, where the first link includes a first tunnel from the first mobile router to a second mobile router and a second tunnel from the second mobile router to the current mobile router of the correspondent node, and the second mobile router is a mobile router to which the MN is previously attached.

The embodiments of the present invention provide the routing control policy information, and the routing control policy information may be used to indicate whether to enable routing control. After the first data packet that is forwarded by the MN and is from the first home address is obtained, if it is determined to enable routing control, the first data packet may be sent to the CN by using the first link, where the first link includes the designated routing node. In this way, the first data packet may pass through a designated routing node in a sending process, and the designated routing node may perform some processing processes on the first data packet, which resolves a technical problem in the prior art that data cannot arrive at a designated network node in a sending process. In addition, after the method in the embodiments of the present invention is used, the first data packet directly arrives at the designated network node, and then, is sent directly to the CN, which is equivalent to performing route optimization. Unlike the prior art in which without route optimization, multiple nodes generally need to be passed through, in the embodiments of the present invention, the first data packet passes through a relatively short path, and a probability of error occurrence is relatively low in the path.

It may be clearly understood by persons skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely used to describe the technical solutions of the present application. The foregoing embodiments are merely intended to help understand the method and core idea of the present invention, and shall not be construed as a limitation on the present invention. Any variation or replacement readily figured out by persons skilled in the art within the technical scope disclosed in the present invention shall fall within the protection scope of the present invention.

## Claims

1. A data packet sending method, comprising:
receiving (2A01), by a first mobile router, a first data packet that is forwarded by a mobile node, MN, and comprises a first home address, wherein the first mobile router is a mobile router to which the MN is currently attached;
determining (2A02), by the first mobile router according to routing control policy information, to enable routing control on the first data packet, wherein the routing control policy information comprises indication information for enabling routing control; and
sending (2A03), by the first mobile router, the first data packet to a current mobile router of a correspondent node by using a first link, wherein the first link comprises a first tunnel from the first mobile router to a second mobile router and a second tunnel from the second mobile router to the current mobile router of the correspondent node, and the second mobile router is a mobile router to which the MN was previously attached.

2. The method according to claim 1, before the receiving, by the first mobile router, a first data packet that is forwarded by a mobile node MN and comprises a first home address, further comprising:
obtaining, by the first mobile router, the routing control policy information, wherein the routing control policy information comprises address information of the second mobile router; and
establishing, by the first mobile router, the first tunnel according to the address information of the second mobile router.

3. The method according to claim 2, wherein the obtaining, by the first mobile router, the routing control policy information comprises: when the MN is attached to the first mobile router, obtaining, by the first mobile router, the routing control policy information from a home location manager of the MN.

4. The method according to claim 2, wherein the obtaining, by the first mobile router, the routing control policy information comprises: when the MN is attached to the first mobile router, receiving, by the first mobile router, the routing control policy information and a tunnel establishment instruction that are sent by the MN; and
the establishing, by the first mobile router, the first tunnel according to the address information of the second mobile router comprises: establishing, by the first mobile router, the first tunnel according to the tunnel establishment instruction and the address information of the second mobile router.

5. The method according to any one of claims 2 to 4, after the establishing, by the first mobile router, the first tunnel according to the address information of the second mobile router, further comprising:
triggering, by the first mobile router, the second mobile router to release a tunnel from the second mobile router to a source mobile router of the MN, wherein the source mobile router of the MN is a mobile router, except the second mobile router, in the mobile router to which the MN is previously attached.

6. The method according to claim 2, wherein the obtaining, by the first mobile router, the routing control policy information comprises: receiving, by the first mobile router, a routing control request, wherein the routing control request comprises the routing control policy information.

7. A mobile router acting as a first mobile router, comprising:
a receiving module (1501), configured to receive a first data packet that is forwarded by an MN and comprises a first home address, wherein the first mobile router is a mobile router to which the MN is currently attached;
a processing module (1502), configured to determine, according to routing control policy information, to enable routing control on the first data packet, wherein the routing control policy information comprises indication information for enabling routing control; and
a sending module (1503), configured to send the first data packet to a current mobile router of a correspondent node by using a first link, wherein the first link comprises a first tunnel from the first mobile router to a second mobile router and a second tunnel from the second mobile router to the current mobile router of the correspondent node, and the second mobile router is a mobile router to which the MN was previously attached.

8. The mobile router according to claim 7, wherein the receiving module is further configured to obtain the routing control policy information, wherein the routing control policy information comprises address information of the second mobile router; and
the mobile router further comprises: an establishment module, configured to establish the first tunnel according to the address information of the second mobile router.

9. The mobile router according to claim 8, wherein the receiving module is specifically configured to: when the MN is attached to the first mobile router, obtain the routing control policy information from a home location manager of the MN.

10. The mobile router according to claim 8, wherein the receiving module is specifically configured to: when the MN is attached to the first mobile router, receive, by using the receiving module, the routing control policy information and a tunnel establishment instruction that are sent by the MN; and
the establishment module is specifically configured to establish the first tunnel according to the tunnel establishment instruction and the address information of the second mobile router.

11. The mobile router according to any one of claims 8 to 10, wherein the processing module is further configured to trigger the second mobile router to release a tunnel from the second mobile router to a source mobile router of the MN, wherein the source mobile router of the MN is a mobile router, except the second mobile router, in the mobile router to which the MN is previously attached.

12. The mobile router according to claim 8, wherein the receiving module is further configured to receive a routing control request, wherein the routing control request comprises the routing control policy information.

13. The mobile router according to claim 12, wherein the processing module is further configured to initiate an update procedure to a home location manager of the MN, so that the home location manager of the MN updates, according to the routing control policy information carried in the routing control request, routing control policy information that is stored in the home location manager of the MN and corresponds to the MN.

14. The mobile router according to claim 12, wherein the processing module is further configured to initiate an update procedure to the MN, so that the MN updates, according to the routing control policy information carried in the routing control request, routing control policy information stored in the MN.

15. The mobile router according to any one of claims 7 to 14, wherein the enabling routing control refers to enabling routing control on a designated home address of the MN, or the enabling routing control refers to enabling routing control on all data packets of the MN.

## Patentansprüche

1. Datenpaket-Sendeverfahren, umfassend:
Empfangen (2A01), durch einen ersten mobilen Router, eines ersten Datenpakets, das durch einen mobilen Knoten, MN, weitergeleitet wird und eine erste Heimatadresse umfasst, wobei der erste mobile Router ein mobiler Router ist, an dem der MN gegenwärtig angeschlossen ist;
Bestimmen (2A02), durch den ersten mobilen Router gemäß Routing-Steuerrichtlinieninformationen, eine Routing-Steuerung auf dem ersten Datenpaket zu aktivieren, wobei die Routing-Steuerrichtlinieninformationen Angabeinformationen zum Aktivieren der Routing-Steuerung umfassen; und
Senden (2A03), durch den ersten mobilen Router, des ersten Datenpakets zu einem gegenwärtigen mobilen Router eines entsprechenden Knotens unter Verwendung einer ersten Verbindung, wobei die erste Verbindung einen ersten Tunnel vom ersten mobilen Router zu einem zweiten mobilen Router und einen zweiten Tunnel vom zweiten mobilen Router zum gegenwärtigen mobilen Router des entsprechenden Knotens umfasst und der zweite mobile Router ein mobiler Router ist, an dem der MN zuvor angeschlossen war.

2. Verfahren nach Anspruch 1, das vor dem Empfangen, durch den ersten mobilen Router, eines ersten Datenpakets, das durch einen mobilen Knoten MN weitergeleitet wird und eine erste Heimatadresse umfasst, ferner Folgendes umfasst:
Erhalten, durch den ersten mobilen Router, der Routing-Steuerrichtlinieninformationen, wobei die Routing-Steuerrichtlinieninformationen Adressinformationen des zweiten mobilen Routers umfassen; und
Aufbauen, durch den ersten mobilen Router, des ersten Tunnels gemäß den Adressinformationen des zweiten mobilen Routers.

3. Verfahren nach Anspruch 2, wobei das Erhalten, durch den ersten mobilen Router, der Routing-Steuerrichtlinieninformationen Folgendes umfasst: wenn der MN an den ersten mobilen Router angeschlossen ist, Erhalten, durch den ersten mobilen Router, der Routing-Steuerrichtlinieninformationen von einem Heimatpositionsmanager des MN.

4. Verfahren nach Anspruch 2, wobei das Erhalten, durch den ersten mobilen Router, der Routing-Steuerrichtlinieninformationen Folgendes umfasst: wenn der MN an den ersten mobilen Router angeschlossen ist, Empfangen, durch den ersten mobilen Router, der Routing-Steuerrichtlinieninformationen und einer Tunnelaufbauanweisung, die durch den MN gesendet werden; und
das Aufbauen, durch den ersten mobilen Router, des ersten Tunnels gemäß den Adressinformationen des zweiten mobilen Routers Folgendes umfasst: Aufbauen, durch den ersten mobilen Router, des ersten Tunnels gemäß der Tunnelaufbauanweisung und den Adressinformationen des zweiten mobilen Routers.

5. Verfahren nach einem der Ansprüche 2 bis 4, das nach dem Aufbauen, durch den ersten mobilen Router, des ersten Tunnels gemäß den Adressinformationen des zweiten mobilen Routers ferner Folgendes umfasst:
Auslösen, durch den ersten mobilen Router, des zweiten mobilen Routers, so dass ein Tunnel vom zweiten mobilen Router zu einem mobilen Quellrouter des MN freigegeben wird, wobei der mobile Quellrouter des MN ein mobiler Router ist, außer dem zweiten mobilen Router, im mobilen Router, an dem der MN zuvor angeschlossen ist.

6. Verfahren nach Anspruch 2, wobei das Erhalten, durch den ersten mobilen Router, der Routing-Steuerrichtlinieninformationen Folgendes umfasst: Empfangen, durch den ersten mobilen Router, einer Routing-Steueranfrage, wobei die Routing-Steueranfrage die Routing-Steuerrichtlinieninformationen umfasst.

7. Mobiler Router, der als ein erster mobiler Router agiert, umfassend:
ein Empfangsmodul (1501), das zum Empfangen eines ersten Datenpakets, das durch einen MN weitergeleitet wird und eine erste Heimatadresse umfasst, konfiguriert ist, wobei der erste mobile Router ein mobiler Router ist, an dem der MN gegenwärtig angeschlossen ist;
ein Verarbeitungsmodul (1502), das zum Bestimmen, gemäß Routing-Steuerrichtlinieninformationen, eine Routing-Steuerung am ersten Datenpaket zu aktivieren, konfiguriert ist, wobei die Routing-Steuerrichtlinieninformationen Angabeinformationen zum Aktivieren der Routing-Steuerung umfassen; und
ein Sendemodul (1503), das zum Senden des ersten Datenpakets zu einem gegenwärtigen mobilen Router eines entsprechenden Knotens unter Verwendung einer ersten Verbindung konfiguriert ist, wobei die erste Verbindung einen ersten Tunnel vom ersten mobilen Router zu einem zweiten mobilen Router und einen zweiten Tunnel vom zweiten mobilen Router zum gegenwärtigen mobilen Router des entsprechenden Knotens umfasst und der zweite mobile Router ein mobiler Router ist, an dem der MN zuvor angeschlossen war.

8. Mobiler Router nach Anspruch 7, wobei das Empfangsmodul ferner zum Erhalten der Routing-Steuerrichtlinieninformationen konfiguriert ist, wobei die Routing-Steuerrichtlinieninformationen Adressinformationen des zweiten mobilen Routers umfassen; und
der mobile Router ferner ein Aufbaumodul umfasst, das zum Aufbauen des ersten Tunnels gemäß den Adressinformationen des zweiten mobilen Routers konfiguriert ist.

9. Mobiler Router nach Anspruch 8, wobei das Empfangsmodul, wenn der MN an den ersten mobilen Router angeschlossen ist, spezifisch zum Erhalten der Routing-Steuerrichtlinieninformationen von einem Heimatpositionsmanager des MN konfiguriert ist.

10. Mobiler Router nach Anspruch 8, wobei das Empfangsmodul, wenn der MN an den ersten mobilen Router angeschlossen ist, spezifisch zum Empfangen, unter Verwendung des Empfangsmoduls, der Routing-Steuerrichtlinieninformationen und einer Tunnelaufbauanweisung, die durch den MN gesendet werden, konfiguriert ist; und
das Aufbaumodul spezifisch zum Aufbauen des ersten Tunnels gemäß der Tunnelaufbauanweisung und den Adressinformationen des zweiten mobilen Routers konfiguriert ist.

11. Mobiler Router nach einem der Ansprüche 8 bis 10, wobei das Verarbeitungsmodul ferner zum Auslösen des zweiten mobilen Routers konfiguriert ist, so dass ein Tunnel vom zweiten mobilen Router zu einem mobilen Quellrouter des MN freigegeben wird, wobei der mobile Quellrouter des MN ein mobiler Router ist, außer dem zweiten mobilen Router, im mobilen Router, an dem der MN zuvor angeschlossen ist.

12. Mobiler Router nach Anspruch 8, wobei das Empfangsmodul ferner zum Empfangen einer Routing-Steueranfrage konfiguriert ist, wobei die Routing-Steueranfrage die Routing-Steuerrichtlinieninformationen umfasst.

13. Mobiler Router nach Anspruch 12, wobei das Verarbeitungsmodul ferner zum Initiieren einer Aktualisierungsprozedur zu einem Heimatpositionsmanager des MN konfiguriert ist, so dass der Heimatpositionsmanager des MN Routing-Steuerrichtlinieninformationen, die im Heimatpositionsmanager des MN gespeichert sind und dem MN entsprechen, gemäß den Routing-Steuerrichtlinieninformationen, die in der Routing-Steueranfrage geführt werden, aktualisiert.

14. Mobiler Router nach Anspruch 12, wobei das Verarbeitungsmodul ferner zum Initiieren einer Aktualisierungsprozedur zum MN konfiguriert ist, so dass der MN Routing-Steuerrichtlinieninformationen, die im MN gespeichert sind, gemäß den Routing-Steuerrichtlinieninformationen, die in der Routing-Steueranfrage geführt werden, aktualisiert.

15. Mobiler Router nach einem der Ansprüche 7 bis 14, wobei sich das Aufbauen einer Routing-Steuerung auf ein Aufbauen der Routing-Steuerung auf einer designierten Heimatadresse des MN bezieht oder sich das Aufbauen einer Routing-Steuerung auf ein Aufbauen der Routing-Steuerung auf allen Datenpaketen des MN bezieht.

## Revendications

1. Procédé d'envoi de paquets de données, comprenant :
la réception (2A01), par un premier routeur mobile, d'un premier paquet de données qui est acheminé par un noeud mobile, MN, et comprend une première adresse d'abonné nominal, dans lequel le premier routeur mobile est un routeur mobile auquel le MN est actuellement connecté ;
la détermination (2A02), par le premier routeur mobile selon des informations de règle de contrôle de routage, pour activer un contrôle de routage sur le premier paquet de données, dans lequel les informations de règle de contrôle de routage comprennent des informations d'indication pour activer un contrôle de routage ; et
l'envoi (2A03), par le premier routeur mobile, du premier paquet de données à un routeur mobile actuel d'un noeud correspondant en utilisant une première liaison, dans lequel la première liaison comprend un premier tunnel du premier routeur mobile à un second routeur mobile et un second tunnel du second routeur mobile au routeur mobile actuel du noeud correspondant, et le second routeur mobile est un routeur mobile auquel le MN était précédemment connecté.

2. Procédé selon la revendication 1, avant la réception, par le premier routeur mobile, d'un premier paquet de données qui est acheminé par un noeud mobile MN et comprend une première adresse d'abonné nominal, comprenant en outre :
l'obtention, par le premier routeur mobile, des informations de règle de contrôle de routage, dans lequel les informations de règle de contrôle de routage comprennent des informations d'adresse du second routeur mobile ; et
l'établissement, par le premier routeur mobile, du premier tunnel selon les informations d'adresse du second routeur mobile.

3. Procédé selon la revendication 2, dans lequel l'obtention, par le premier routeur mobile, des informations de règle de contrôle de routage comprend : lorsque le MN est connecté au premier routeur mobile, l'obtention, par le premier routeur mobile, des informations de règle de contrôle de routage en provenance d'un gestionnaire de localisation nominale du MN.

4. Procédé selon la revendication 2, dans lequel l'obtention, par le premier routeur mobile, des informations de règle de contrôle de routage comprend : lorsque le MN est connecté au premier routeur mobile, la réception, par le premier routeur mobile, des informations de règle de contrôle de routage et d'une instruction d'établissement de tunnel qui sont envoyées par le MN ; et
l'établissement, par le premier routeur mobile, du premier tunnel selon les informations d'adresse du second routeur mobile comprend : l'établissement, par le premier routeur mobile, du premier tunnel selon l'instruction d'établissement de tunnel et les informations d'adresse du second routeur mobile.

5. Procédé selon l'une quelconque des revendications 2 à 4, après l'établissement, par le premier routeur mobile, du premier tunnel selon les informations d'adresse du second routeur mobile, comprenant en outre :
le déclenchement, par le premier routeur mobile, du second routeur mobile pour qu'il libère un tunnel du second routeur mobile à un routeur mobile de source du MN, dans lequel le routeur mobile de source du MN est un routeur mobile, à l'exception du second routeur mobile, dans le routeur mobile auquel le MN était précédemment connecté.

6. Procédé selon la revendication 2, dans lequel l'obtention, par le premier routeur mobile, des informations de règle de contrôle de routage comprend : la réception, par le premier routeur mobile, d'une demande de contrôle de routage, dans lequel la demande de contrôle de routage comprend les informations de règle de contrôle de routage.

7. Routeur mobile servant de premier routeur mobile, comprenant :
un module de réception (1501), configuré pour recevoir un premier paquet de données qui est acheminé par un MN et comprend une première adresse d'abonné nominal, dans lequel le premier routeur mobile est un routeur mobile auquel le MN est actuellement connecté ;
un module de traitement (1502), configuré pour déterminer, selon des informations de règle de contrôle de routage, pour activer un contrôle de routage sur le premier paquet de données, dans lequel les informations de règle de contrôle de routage comprennent des informations d'indication pour activer un contrôle de routage ; et
un module d'envoi (1503), configuré pour envoyer le premier paquet de données à un routeur mobile actuel d'un noeud correspondant en utilisant une première liaison, dans lequel la première liaison comprend un premier tunnel du premier routeur mobile à un second routeur mobile et un second tunnel du second routeur mobile au routeur mobile actuel du noeud correspondant, et le second routeur mobile est un routeur mobile auquel le MN était précédemment connecté.

8. Routeur mobile selon la revendication 7, dans lequel le module de réception est en outre configuré pour obtenir les informations de règle de contrôle de routage, dans lequel les informations de règle de contrôle de routage comprennent des informations d'adresse du second routeur mobile ; et
le routeur mobile comprend en outre : un module d'établissement, configuré pour établir le premier tunnel selon les informations d'adresse du second routeur mobile.

9. Routeur mobile selon la revendication 8, dans lequel le module de réception est spécifiquement configuré pour : lorsque le MN est connecté au premier routeur mobile, obtenir les informations de règle de contrôle de routage en provenance d'un gestionnaire de localisation nominale du MN.

10. Routeur mobile selon la revendication 8, dans lequel le module de réception est spécifiquement configuré pour : lorsque le MN est connecté au premier routeur mobile, recevoir, en utilisant le module de réception, les informations de règle de contrôle de routage et une instruction d'établissement de tunnel qui sont envoyées par le MN ; et
le module d'établissement est spécifiquement configuré pour établir le premier tunnel selon l'instruction d'établissement de tunnel et les informations d'adresse du second routeur mobile.

11. Routeur mobile selon l'une quelconque des revendications 8 à 10, dans lequel le module de traitement est en outre configuré pour déclencher le second routeur mobile pour qu'il libère un tunnel du second routeur mobile à un routeur mobile de source du MN, dans lequel le routeur mobile de source du MN est un routeur mobile, à l'exception du second routeur mobile, dans le routeur mobile auquel le MN était précédemment connecté.

12. Routeur mobile selon la revendication 8, dans lequel le module de réception est en outre configuré pour recevoir une demande de contrôle de routage, dans lequel la demande de contrôle de routage comprend les informations de règle de contrôle de routage.

13. Routeur mobile selon la revendication 12, dans lequel le module de traitement est en outre configuré pour lancer une procédure de mise à jour pour un gestionnaire de localisation nominale du MN, de sorte que le gestionnaire de localisation nominale du MN mette à jour, selon les informations de règle de contrôle de routage véhiculées dans la demande de contrôle de routage, des informations de règle de contrôle de routage qui sont stockées dans le gestionnaire de localisation nominale du MN et correspondent au MN.

14. Routeur mobile selon la revendication 12, dans lequel le module de traitement est en outre configuré pour lancer une procédure de mise à jour pour le MN, de sorte que le MN mette à jour, selon les informations de règle de contrôle de routage véhiculées dans la demande de contrôle de routage, des informations de règle de contrôle de routage stockées dans le MN.

15. Routeur mobile selon l'une quelconque des revendications 7 à 14, dans lequel l'activation d'un contrôle de routage fait référence à l'activation d'un contrôle de routage sur une adresse d'abonné nominal désignée du MN, ou l'activation d'un contrôle de routage fait référence à l'activation d'un contrôle de routage sur tous les paquets de données du MN.
